# EUROPEAN PATENT APPLICATION

(11) **EP 3 287 689 A1**
(43) Date of publication of application: **28.02.2018**
(21) Application number: 16783130.4
(22) Date of filing: 19.04.2016
(51) Int. Cl.: F21S 2/00, F21V 8/00, F21V 9/16, G02F 1/13357, F21Y 115/10, F21Y 115/20

(54) **LIGHTING DEVICE, DISPLAY DEVICE, AND TELEVISION RECEPTION DEVICE**

(30) Priority: 20.04.2015 JP 2015085892
(71) Applicant: Sharp Kabushiki Kaisha, Sakai City, Osaka 590-8522 (JP)
(72) Inventor: SHIMIZU Takaharu, Sakai City Osaka 590-8522 (JP)
(74) Representative: Müller Hoffmann & Partner
(86) International application number: PCT/JP2016/062302
(87) International publication number: WO 2016/171109

(57) **Abstract**

A backlight unit 12 (a lighting device) includes LEDs 17 (a light source), a light guide plate 19, and a wavelength converter 20. The light guide plate 19 includes a light entering end surface 19b through which light rays from the LEDs 17 enter and a light exiting plate surface 19a through which the light rays exit. The light entering end surface 19b is at least a section of a peripheral surface of the light guide plate 19. The light exiting plate surface 19a is any one of plate surfaces of the light guide plate 19. The wavelength converter 20 contains phosphors for converting wavelengths of the light rays from the LEDs 17. The wavelength converter 20 is integrally provided with the light guide plate 19 with direct contact with the light entering end surface 19b and disposed between the LEDs 17 and the light entering end surface 19b.

## Description

### TECHNICAL FIELD

The present invention relates to a lighting device, a display device, and a television device.

### BACKGROUND ART

An example of conventional liquid crystal display devices is disclosed in Patent Document 1. The liquid crystal display device disclosed in Patent Document 1 includes a liquid crystal panel and an edge light type backlight unit. The backlight unit includes a light guide member and a light reflection plate. The backlight unit further includes blue LED light sources around the light guide member and the light reflection plate for directing light rays to the light guide member. The light guide member includes a reflection surface on which reflection dots are formed for reflecting the light rays from the blue LED light sources. The reflection dots and phosphor portions are integrally formed.

### RELATED ART DOCUMENT

### Patent Document

Patent Document 1: Unexamined Japanese Patent Application Publication No. 2014-235891

### Problem to be Solved by the Invention

In the backlight unit disclosed in Patent Document 1, the reflection dots formed on the reflection surface of the light guide member are integrally formed with the phosphor portions that are made of semiconductor quantum dots. Therefore, an amount of semiconductor quantum dots tends to be large. The semiconductor quantum dots are significantly expensive in comparison to other phosphor materials and thus a high production cost is an issue.

### DISCLOSURE OF THE PRESENT INVENTION

The present invention was made in view of the above circumstances. An object is to reduce a production cost.

### First Means for Solving the Problem

A lighting device according to the present invention includes a light source, a light guide plate, and a wavelength converter. The light guide plate includes a light entering end surface and a light exiting plate surface. The light entering end surface is at least a section of a peripheral surface of the light guide plate and through which light rays from the light source enter. The light exiting plate surface is any one of plate surfaces of the light guide plate and through which the light rays exit. The wavelength converter is disposed between the light source and the light entering end surface and integrally provide with the light guide plate with direct contact with the light entering end surface. The wavelength converter contains phosphors for converting wavelengths of the light rays from the light source.

According to the configuration, the light rays emitted by the light source pass through the wavelength converter disposed between the light source and the light entering end surface and wavelengths of the light rays are converted. The light rays enter the light guide plate through the light entering end surface and exit through the light exiting plate surface. Because the wavelength converter is disposed between the light source and the light entering end surface of the light guide plate, in comparison to a configuration in which the wavelength converter is disposed to overlap the plate surface of the light guide plate, an amount of the phosphors is small. Therefore, a production cost can be reduced. Because the wavelength converter is integrally provided with the light guide plate with direct contact with the light entering end surface, an air layer is less likely to be formed between the wavelength converter and the light entering end surface. According to the configuration, the light rays that have passed through the wavelength converter are less likely to be refracted at the light entering end surface when entering the light guide plate. Therefore, light entering efficiency to the light entering end surface increases and thus high light use efficiency is achieved.

Preferable embodiments of the present invention may include the following configurations.
(1) The wavelength converter may include at least a phosphor containing portion and a reflection layer. The phosphor containing portion may include a light entering surface, a light exiting surface, and an annular surface. The light entering surface may face straight to the light source. The light exiting surface may face straight to the light entering end surface. The annular surface having an annular shape may be adj acent to the light entering surface and the light exiting surface. The reflection layer may be disposed on an outer side of the phosphor containing portion along at least a section of the annular surface to reflect the light rays. According to the configuration, the light rays from the light source enter the phosphor containing portion through the light entering surface, exit the phosphor containing portion through the light exiting surface, and enter the light guide plate through the light entering end surface. The light rays passing through the phosphor containing portion are reflected by the reflection layer disposed on the outer side of the phosphor containing portion along at least the section of the annular surface. Therefore, the light rays are less likely to leak to the outside of the reflection layer and efficiently directed to the light exiting surface. According to the configuration, the light entering efficiency to the light entering end surface of the light guide plate and thus the light use efficiency further increases.
(2) The wavelength converter may include at least a phosphor containing portion and a holding portion. The phosphor containing portion may contain the phosphors. The phosphor containing portion may include a light entering surface, a light exiting surface, and an annular surface. The light entering surface may face straight to the light source. The light exiting surface may face straight to the light entering end surface. The annular surface having an annular shape may be adjacent to the light entering surface and the light exiting surface. The holding portion may surround the phosphor containing portion along at least the annular surface and hold the phosphor containing portion. According to the configuration, the light rays from the light source enter the phosphor containing portion through the light entering surface, exit through the light exiting surface, and enter the light guide plate through the light entering end surface. Because the holding portion surrounds the phosphor containing portion along at least the annular surface and holds the phosphor containing portion, a positional relationship between the light entering end surface of the light guide plate and the phosphor containing portion is stabilized.
(3) The wavelength converter may include a reflection layer disposed on an outer side of the phosphor containing portion along at least a section of the annular surface to reflect the light rays. The reflection layer may be disposed between the phosphor containing portion and the holding portion. According to the configuration, the light rays from the light source enter the phosphor containing portion through the light entering surface, exit the phosphor containing portion through the light exiting surface, and enter the light guide plate through the light entering end surface. The light rays passing through the phosphor containing portion are reflected by the reflection layer disposed on the outer side of the phosphor containing portion along at least the section of the annular surface. Therefore, the light rays are less likely to leak to the outside of the reflection layer and efficiently directed to the light exiting surface. According to the configuration, the light entering efficiency to the light entering end surface of the light guide plate further increases and thus the light use efficiency further increases. Because the reflection layer is disposed between the phosphor containing portion and the holding portion, the light rays passing through the phosphor containing portion are reflected by the reflection layer before entering the holding portion. According to the configuration, the light rays passing through the phosphor containing portion are more efficiently directed to the light exiting surface and thus the light use efficiency further increases.
(4) The wavelength converter may include a reflection layer disposed on an outer side of the phosphor containing portion along at least a section of the annular surface to reflect the light rays. The reflection layer may be in contact with a surface of the holding portion on an opposite side from a phosphor containing portion side. According to the configuration, the light rays from the light source enter the phosphor containing portion through the light entering surface, exit the phosphor containing portion through the light exiting surface, and enter the light guide plate through the light entering end surface. The light rays passing through the phosphor containing portion are reflected by the reflection layer disposed on the outer side of the phosphor containing portion along at least the section of the annular surface. Therefore, the light rays are less likely to leak to the outside of the reflection layer and efficiently directed to the light exiting surface. According to the configuration, the light entering efficiency to the light entering end surface of the light guide plate further increases and thus the light use efficiency further increases. Because the reflection layer is in contact with the surface of the holding portion on the opposite side from the phosphor containing portion side, the reflection layer can be easily formed, that is, this configuration has an advantage in production.
(5) The holding portion may be integrally formed with the light guide plate. According to the configuration, a positional relationship between the light entering end surface of the light guide plate and the phosphor containing portion is stabilized with high accuracy.
(6) The holding portion may be a separate component from the light guide plate and joined to the light guide plate. According to the configuration, an outer shape of the light guide plate is less likely to be complicated.
(7) The lighting device may further include a collective sealing member that collectively surrounds the wavelength converter and the light guide plate to encapsulate the phosphors. According to the configuration, the phosphors contained in the phosphor containing portion are encapsulated with the collective sealing member that collectively surrounds the wavelength converter and the light guide plate. Therefore, the phosphors are less likely to be degrades due to absorption of moisture. Because the collective sealing member is not disposed between the wavelength converter and the light guide plate, the light entering efficiency of the light rays from the wavelength converter entering the light entering end surface is maintained high.
(8) The wavelength converter may include a sealing member that surrounds the phosphor containing portion and the holding portion to encapsulate the phosphors. According to the configuration, the phosphors contained in the phosphor containing portion are encapsulated with the sealing member that surrounds the phosphor containing portion and the holding portion. Therefore, the phosphors are less likely to be degraded due to absorption of moisture. Because the sealing member surrounds the phosphor containing portion and the holding portions but not the light guide plate, an amount of material of the sealing member is small in comparison to a configuration in which the sealing member collectively surrounds the phosphor containing portion, the holding portion, and the light guide plate.
(9) The holding portion may be disposed to surround an entire area of the phosphor containing portion. According to the configuration, the phosphor containing portion is further stably held.
(10) The light guide plate and the holding portion are made of glass material. According to the configuration, moisture proof properties of the phosphors contained in the phosphor containing portion are properly maintained. Therefore, the phosphors are further less likely to be degraded due to the absorption of moisture.
(11) The phosphors in the wavelength converter may be quantum dot phosphors. According to the configuration, high efficiency is achieved in wavelength conversion by the wavelength converter and high purity is achieved in colors of the light rays after the wavelength conversion.

To solve the problem described earlier, a display device according the present invention includes the lighting device described above and a display panel configured to display an image using light from the lighting device. According to the display device having such a configuration, because the cost of the lighting device is reduced, a production cost of the display device can be reduced.

To solve the problem described earlier, a television device according to the present invention includes the display device described above. According to the television device, because the cost of the display device is reduced, a production cost of the television device can be reduced.

### Advantageous Effect of the Invention

According to the present invention, the production cost can be reduced.

### BRIEF DESCRIPTION OF THE DRAWINGS

FIG. 1 is an exploded perspective view illustrating a general configuration of a television device according to a first embodiment of the present invention.
FIG. 2 is an exploded perspective view illustrating a general configuration of a liquid crystal display device included in the television device.
FIG. 3 is a plan view illustrating a chassis, an LED board, and a light guide plate of a backlight unit included in the liquid crystal display device.
FIG. 4 is a cross-sectional view illustrating a cross-sectional configuration of the liquid crystal display device along a short direction.
FIG. 5 is a cross-sectional view illustrating a cross-sectional configuration of the liquid crystal display device along a long direction.
FIG. 6 is a cross-sectional view of an LED and an LED board.
FIG. 7 is a magnified view of FIG. 4.
FIG. 8 is a cross-sectional view along line viii-viii in FIG. 4.
FIG. 9 is a cross-sectional view of a liquid crystal display device according a second embodiment of the present invention along a short direction.
FIG. 10 is a cross-sectional view along line x-x in FIG. 9.
FIG. 11 is a cross-sectional view of a liquid crystal display device according a third embodiment of the present invention along a short direction.
FIG. 12 is a cross-sectional view of a liquid crystal display device according a fourth embodiment of the present invention along a short direction.
FIG. 13 is a cross-sectional view along line xiii-xiii in FIG. 12.
FIG. 14 is a cross-sectional view of a liquid crystal display device according a fifth embodiment of the present invention along a short direction.
FIG. 15 is a cross-sectional view along line xv-xv in FIG. 14.
FIG. 16 is a cross-sectional view of a liquid crystal display device according a sixth embodiment of the present invention along a short direction.
FIG. 17 is a cross-sectional view along line xvii-xvii in FIG. 16.
FIG. 18 is a cross-sectional view of a liquid crystal display device according a seventh embodiment of the present invention along a short direction.
FIG. 19 is a cross-sectional view along line xix-xix in FIG. 18
FIG. 20 is a cross-sectional view of a liquid crystal display device according an eighth embodiment of the present invention along a short direction.
FIG. 21 is a cross-sectional view along line xxi-xxi in FIG. 20.
FIG. 22 is a cross-sectional view of a liquid crystal display device according a ninth embodiment of the present invention along a short direction.
FIG. 23 is a cross-sectional view along line xxiii-xxiii in FIG. 22.

### MODE FOR CARRYING OUT THE INVENTION

### <First Embodiment>

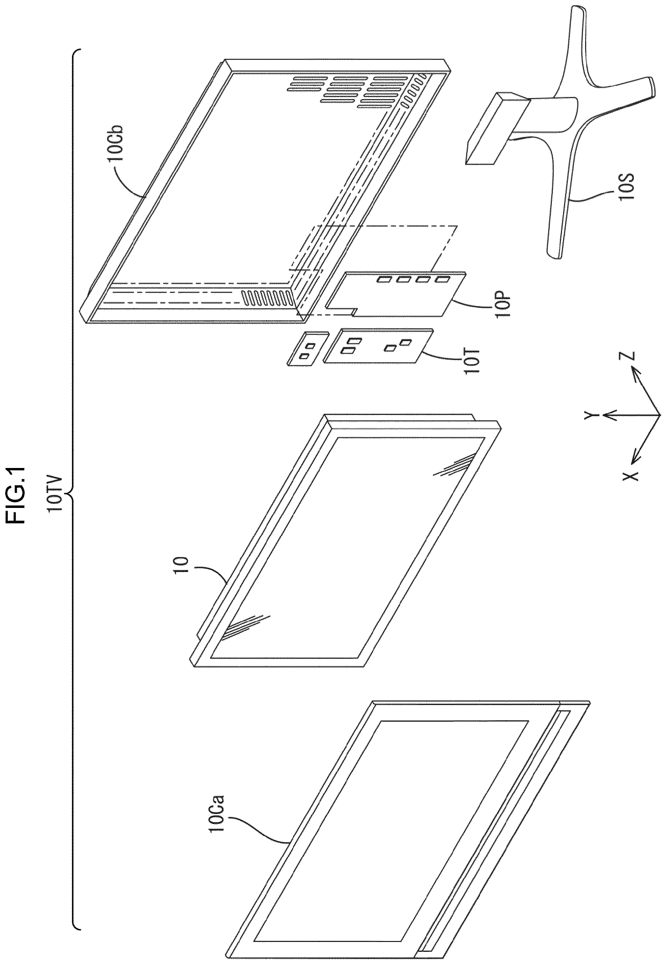

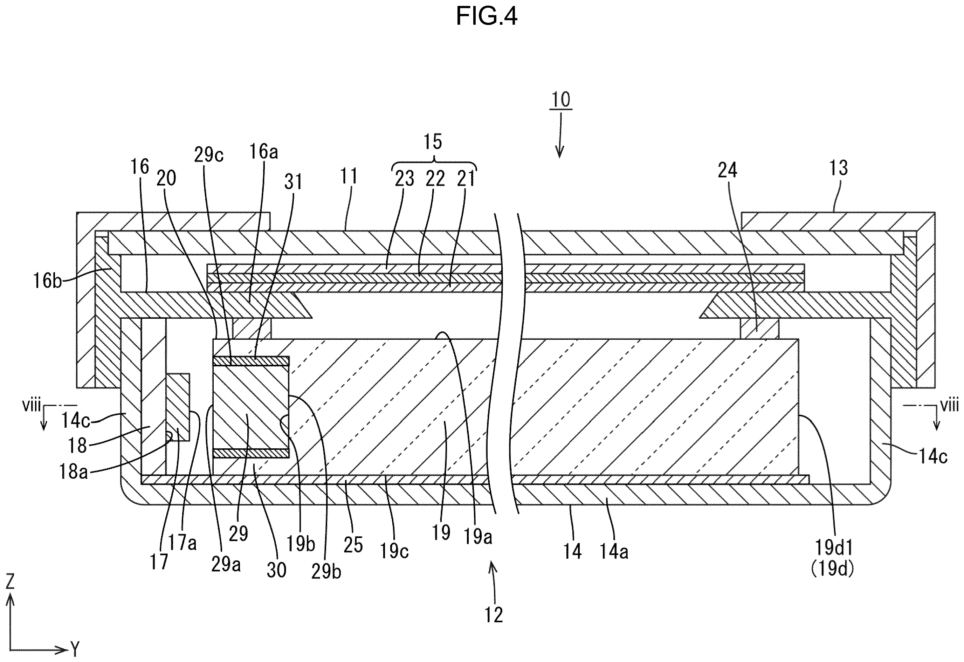

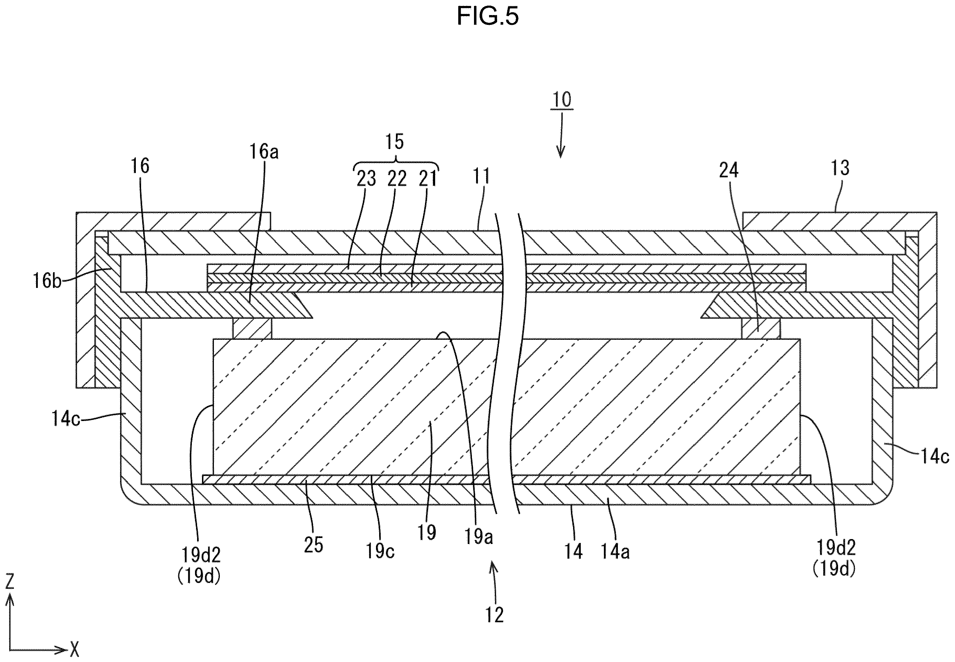

The first embodiment of the present invention will be described with reference to FIGS. 1 to 8. In this section, a backlight unit 12 and a liquid crystal display device 10 including the backlight unit 12 will be described. An X-axis, a Y-axis, and a Z-axis may be present in the drawings. The axes in each drawing correspond to the respective axes in other drawings to indicate the respective directions. An upper side and a lower side in FIGS. 4 and 5 correspond to a front side and a rear side of the liquid crystal display device 10, respectively.

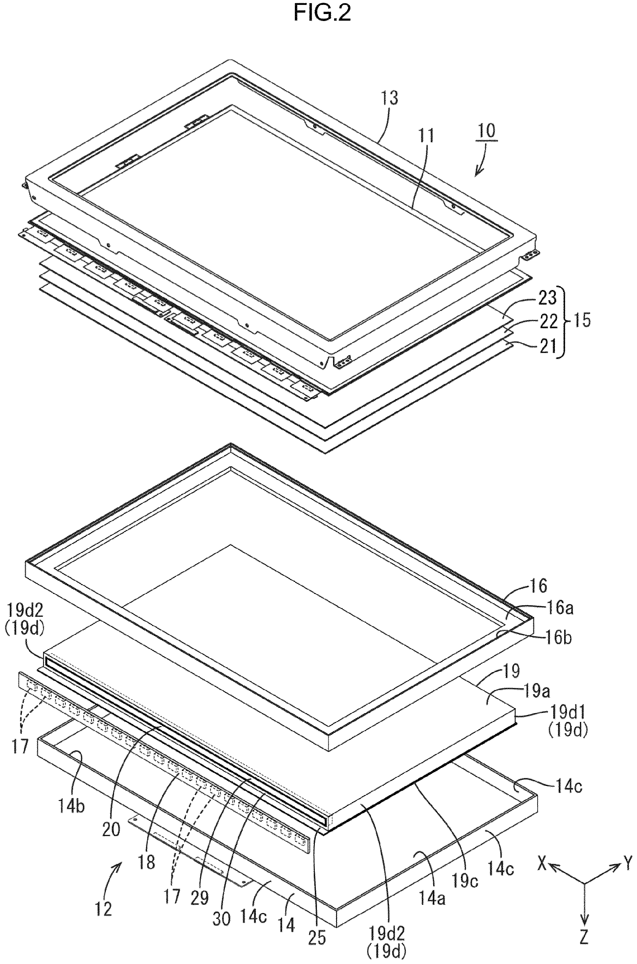

As illustrated in FIG. 1, a television device 10TV according to this embodiment includes the liquid crystal display device 10, a front cabinet 10Ca, a rear cabinet 10Cb, a power supply 10P, a tuner 10T (a receiver), and a stand 10S. The front cabinet 10Ca and the rear cabinet 10Cb sandwich the liquid crystal display device 10 to hold the liquid crystal display device 10. The tuner 10T is configured to receive TV signals. The liquid crystal display device 10 (the display device) has a horizontally-long rectangular overall shape elongated in the horizontal direction. The liquid crystal display device 10 is held in a vertical position. As illustrated in FIG. 2, the liquid crystal display device 10 includes a liquid crystal panel 11 and the backlight unit 12 (the lighting device). The liquid crystal panel 11 is a display panel configured to display images. The backlight unit 12 is an external light source configured to supply light for image display to the liquid crystal panel 11. A bezel 13 having a frame shape collectively holds the liquid crystal panel 11 and the lighting unit 12.

Next, the liquid crystal panel 11 and the backlight unit 12 included in the liquid crystal display device 10 will be described in sequence. The liquid crystal panel 11 (the display panel) has a horizontally-long rectangular shape in a plan view. The liquid crystal panel 11 includes a pair of glass substrates and a liquid crystal layer (not illustrated). The glass substrates are separated from each other with a predefined gap and bonded to each other. The liquid crystal layer is enclosed between the glass substrates. The liquid crystal layer includes liquid crystals having optical properties that vary according to application of an electric filed. On one of the glass substrates (an array substrate, an active matrix substrate), switching components (e.g., TFTs) and pixel electrodes are two-dimensionally arranged in a matrix and an alignment film is formed. The switching components are connected to source lines and gate lines that are perpendicular to one another. The pixel electrodes are disposed in rectangular areas defined by the source lines and the gate lines and connected to the switching components. On the other glass substrate (a counter substrate, a CF substrate), color filters, a light blocking layer (a black matrix), counter electrodes, and an alignment films are formed. The color filters include red (R), green (G), and blue (B) color portions two-dimensionally arranged in a matrix with predefined arrangement. The light blocking layer is formed in a grid solid pattern among the color portions to be opposed to the pixel electrodes. Polarizing plates are disposed on outer surfaces of the glass substrates. Long sides of the liquid crystal panel 11 are along the X-axis direction and short sides of the liquid crystal panel 11 are along the Y-axis direction. Furthermore, a thickness of the liquid crystal panel 11 measures in the Z-axis direction.

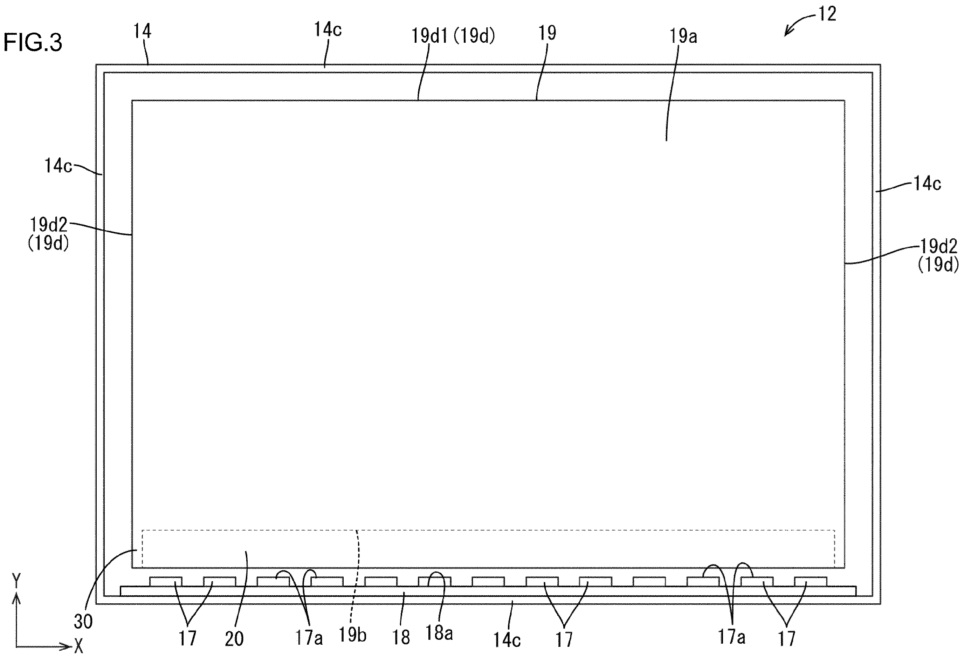

As illustrated in FIG. 2, the backlight unit 12 includes a chassis 14 and an optical member 15. The chassis 14 has a substantially box shape with a light exiting portion 14b that includes an opening on the front side (a liquid crystal panel 11 side, a light exiting side). The optical member 15 (including optical sheets) is disposed to cover the light exiting portion 14b of the chassis 14. The backlight unit 12 further includes LEDs 17, an LED board 18, a light guide plate 19, a wavelength converter 20, and a frame 16 in the chassis 14. The LEDs 17 are light sources. The LEDs 17 are mounted on the LED board 18. The light guide plate 19 is configured to direct light rays from the LEDs 17 to the optical member 15 (the liquid crystal panel 11). The wavelength converter 20 is disposed between the LEDs 17 and the light guide plate 19 and configured to perform wavelength conversion on the light rays from the LEDs 17. The frame 16 presses the light guide plate 19 and other components from the front side and receives the optical member 15 from the back side. The LED board 18 is disposed at one of long edges of the backlight unit 12 (on the near side in FIGS. 2 and 3, on the left side in FIG. 4). The LEDs 17 mounted on the LED board 18 are located on a side closer to one of the long edges of the liquid crystal panel 11. Namely, the backlight unit 12 in this embodiment is an edge light type (side light type) backlight unit, that is, one side light entering type backlight unit in which light rays from the LEDs 17 enter the light guide plate 19 from only one side. The components of the backlight unit 12 will be described in detail.

The chassis 14 is made of metal. As illustrated in FIGS. 2 and 3, the chassis 14 includes a bottom portion 14a and side portions 14c. The bottom portion 14a has a horizontally-long rectangular shape similar to that of the liquid crystal panel 11. The side portions 14c project upward from outer edges of the bottom portion 14a. The chassis 14 has a shallow box shape with an opening on the front side. The chassis 14 (the bottom portion 14a) is orientated with the long direction thereof corresponding with the X-axis direction (the horizontal direction) and the short direction thereof corresponding with the Y-axis direction (the vertical direction). The frame 16 and the bezel 13 are fixed to the side portions 14c.

As illustrated in FIG. 2, the optical member 15 has a horizontally-long rectangular shape in a plan view similar to those of the liquid crystal panel 11 and the chassis 14. The optical member 15 is disposed between the liquid crystal panel 11 and the light guide plate 19 to cover the light exiting portion 14b of the chassis 14. Namely, the optical member 15 is disposed on an exit side of a light exiting path relative to the LEDs 17. The optical member 15 includes three sheets. Specifically, the optical member 15 includes a micro lens sheet 21, a prism sheet 22, and a reflective type polarizing sheet 23. The micro lens sheet 21 is configured to exert isotropic light collecting effects on light rays. The prism sheet 22 is configured to exert anisotropic light collecting effects on the light rays. The reflective type polarizing sheet 23 is configured to polarize and reflect the light rays. As illustrated in FIGS. 4 and 5, the micro lens sheet 21, the prism sheet 22, and the reflective-type polarizing sheet 23 of the optical member 15 are disposed on top of one another in this sequence from the back side. Outer edges of the optical member 15 are placed on the front surface of the frame 16. The micro lens sheet 21, the prism sheet 22, and the reflective-type polarizing sheet 23 of the optical member 15 are disposed on the front side relative to the light guide plate 19, that is, on the light exiting side opposite the light guide plate with a gap of a thickness of the frame 16 (more specifically, a frame shaped portion 16a, which will be described later).

The micro lens sheet 21 includes a base portion and micro lens portion that is formed on a front plate surface of the base portion. The micro lens portion includes unit micro lenses that are two-dimensionally arranged in a matrix along the X-axis direction and the Y-axis direction. Each unit micro lens is a concave lens having a round shape in a plan view and a hemisphere overall shape. With such a configuration, the micro lens sheet 21 isotropically exerts light collecting effects on the light rays with respect to the X-axis direction and the Y-axis direction (the anisotropic light collecting effects). The prism sheet 22 includes a base portion and a prism portion that is formed on a front plate surface of the base portion. The prism portion includes unit prisms that extend in the X-axis direction and are arranged in the Y-axis direction. Each unit prism has a rail shape (linear shape) parallel to the X-axis direction in the plan view and an isosceles triangular cross section along the Y-axis direction. With such a configuration, the prism sheet 22 selectively exerts light collecting effects on the light rays in the Y-axis direction (the arrangement direction of the unit prisms, the direction perpendicular to the extending direction of the unit prisms) (the anisotropic light collecting effects). The reflective-type polarizing sheet 23 includes a reflective type polarizing film and a pair of diffuser films. The reflective type polarizing film is configured to polarize and reflect the light rays. The diffuser films sandwich the reflective type polarizing film from the front side and the back side. The reflective type polarizing film may have a multilayer structure including layers having different refractive indexes and alternately arranged. The reflective type polarizing film passes p wave included in the light rays and reflects the s wave in the light rays to the back side. The s wave reflected by the reflective type polarizing film may be reflected by a reflection sheet 25, which will be described later, or other components to the front side. While traveling as such, the s wave is divided into s wave and p wave. With the reflective type polarizing film, the reflective type polarizing sheet 23 reflects the s wave that is absorbed by the polarizing plate in the liquid crystal panel 11 to the back side (the reflection sheet 25 side) for reuse. Therefore, light use efficiency (or brightness) improves. The diffuser films are made of synthetic resin such as polycarbonate. Emboss processing is performed on plate surfaces of the diffuser films on opposite sides from the reflective type polarizing film sides so that the diffuser films exert diffusing effects on the light rays.

As illustrated in FIG. 2, the frame 16 includes the horizontally-long frame shaped portion 16a (a picture frame-like portion, a frame shaped supporting portion) which extends along peripheral edges of the light guide plate 19 and the optical member 15. The frame shaped portion 16a of the frame 16 is disposed between the optical member 15 (the micro lens sheet 21) and the light guide plate 19 to receive and support the peripheral edges of the optical member 15. With the frame 16, the optical member 15 is held at a position the thickness of the frame shaped portion 16a away from the light guide plate 19. Furthermore, a cushion 24 is attached to the back surface of the frame shaped portion of the frame 16 (on the light guide plate 19 side). The cushion 24 may be made of PORON (registered trademark). The cushion 24 ha a frame shape to extend for an entire perimeter of the frame shaped portion 16a. The frame 16 further includes a liquid crystal panel supporting portion 16b for supporting the peripheral edges of the liquid crystal panel 11 from the back side. The liquid crystal panel supporting portion 16b protrudes from the frame shaped portion 16a toward the front side.

Next, the LEDs 17 and the LED board 18 on which the LEDs 17 are mounted will be described. As illustrated in FIGS. 3 and 4, the LEDs 17 are surface-mounted on the LED board 18. The LEDs 17 including light emitting surfaces 17a that face opposite sides from the LED board 18 are so-called top emitting LEDs. Each LED 17 is a blue LEDs configured to emit light rays in a single color of blue. Some of blue light rays emitted by the LEDs 17 are converted into green light rays or red light rays through wavelength conversion. The green light rays and the red light rays (secondary light rays) are mixed with the blue light rays from the LEDs 17 (primary light rays). Through additive color mixture, substantially white exiting light rays exit from the backlight unit 12.

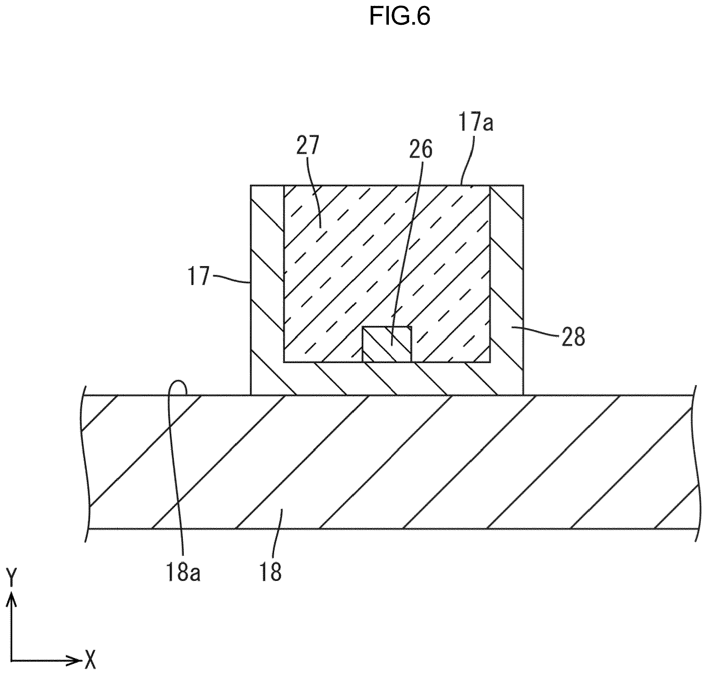

Specifically, as illustrated in FIG. 6, each LED 17 includes a blue LED component 26 (a blue light emitting component, a blue LED chip) which is a light emitting source, a sealing member 27, and a case 28 (a container, a chassis). The sealing member 27 encapsulates the blue LED component 26. The case 28 holds the blue LED component 26 therein. The case 28 is filled with the sealing member 27. The blue LED component 26 is a semiconductor made of InGaN or other semiconductor materials. The blue LED component 26 is configured to emit light rays in a single color of blue with wavelengths in a blue wavelength range (about 420 nm to 500 nm) when forward biased. Namely, the emitting light rays from the LED 17 are in a single color of blue that is the same color as that of the emitting light rays from the blue LED component 26. The blue LED component 26 is connected to a wiring trace on the LED board 18 outside the case 28 via a lead frame, which is not illustrated. In the production process of the LED 17, an internal space of the case 28 that holds the blue LED component 26 therein is filled with the sealing member 27. Through the process, the blue LED component 26 and the lead frame are encapsulated and thus protected. The sealing member 27 is made of substantially transparent thermosetting resin material (e.g., epoxy resin material, silicone resin material). Therefore, the light rays in the single color of blue emitted by the blue LED component 26 exit the LED 17 without change. The case 28 is made of synthetic resin material (e.g., polyamide-based resin material) or ceramic material with a white surface having high light reflectivity. The case 28 has a drum-like overall shape with a bottom and an opening that is on a light emitting surface 17a side. The blue LED component 26 is disposed on a bottom surface. The lead frame penetrates a peripheral wall of the case 28 to connect the blue LED component 26 to the wiring trace on the LED board 18.

As illustrated in FIGS. 3 and 4, the LED board 18 has an elongated plate shape that extends along the long side of the chassis 14 (in the X-axis direction, the longitudinal direction of a light entering end surface 19b of the light guide plate 19). The LED board 18 is held in the chassis 14 with the plate surface thereof parallel to the X-axis direction and the Z-axis direction, that is, perpendicular to the plate surfaces of the liquid crystal panel 11 and the light guide plate 19 (the optical member 15). Namely, the LED board 18 is set in a position with the long sides of the plate surface (a length direction) and the short sides of the plate surface (a width direction) corresponding with the X-axis direction and the Z-axis direction, respectively. Furthermore, a thickness direction of the LED board 18 perpendicular to the plate surface corresponds with the Y-axis direction. The LED board 18 is disposed between the light guide plate 19 and the side portion 14c of the chassis 14 on one of the long sides of the chassis 14. The LED board 18 is held in the Z-axis direction and covered with the chassis 14 from the outer side. The LED board 18 is fixed with the plate surface on an opposite side from the mounting surface 18a on which the LEDs 17 are mounted in contact with an inner surface of the side portion 14c on the long side of the chassis 14. Light emitting surfaces 17a of the LEDs 17 mounted on the LED board 18 are opposed to an end surface of the light guide plate 19 on the long side (the light entering end surface 19b), which will be described later. Furthermore, the optical axis of the LEDs 17, that is, a direction in which the light rays having the highest light emitting intensity substantially corresponds with the Y-axis direction (a direction parallel to the plate surface of the liquid crystal panel 11, an arrangement direction of the LEDs 17 and the light guide plate 19, a direction normal to the light entering end surface 19b).

As illustrated in FIGS. 3 and 4, the inner surface of the LED board 18, that is a plate surface thereof facing the light guide plate 19 (an opposed surface of the LED board 18 opposed to the light guide plate 19) is the mounting surface 18a on which the LEDs 17 having the configuration described above are mounted. The LEDs 17 are arranged in line (linearly arranged) at predefined intervals on the mounting surface 18a of the LED board 18 along the longitudinal direction thereof (the X-axis direction). Namely, the LEDs 17 are arranged at intervals at one of the long edges of the backlight unit 12 along the longitudinal direction of the backlight unit 12. The arrangement direction of the LEDs 17 corresponds with the longitudinal direction of the LED board 18 (the X-axis direction). A distance between the LEDs 17 adjacent to each other in the X-axis direction is about equal to a distance between other LEDs 17 adjacent to each other in the X-axis direction, that is, the intervals of the LEDs 17 are about equal to one another. Namely, the LEDs 17 are arranged at equal intervals. A wiring trace (not illustrated) is formed on the mounting surface 18a of the LED board 18 to extend in the X-axis direction across the LEDs 17 for connecting the adjacent LEDs 17 in series. The wiring trace is formed from a metal film (e.g., a copper foil). Terminals are formed at ends of the wiring trace. An LED driver circuit that is not illustrated is connected to the terminals via wiring members that are not illustrated for supplying driving power to the LEDs 17. Only one of the plate surfaces of the LED board 18 is a mounting surface, that is, the mounting surface 18a. Namely, the LED board 18 is a single-side mounting type board. A base of the LED board 18 is made of metal such as aluminum. The wiring trace (not illustrated) described above is formed on the surface of the base via an insulating layer. An insulating material such as synthetic resin or ceramic may be used for the material of the base of the LED board 18.

The light guide plate 19 is made of substantially transparent glass material having high light transmissivity (e.g., alkali-free glass or silica glass). The glass material of the light guide plate 19 has a refraction index of about 1.5, which is sufficiently higher than the refractive index of air and similar to the refractive index of acrylic resin material (e.g., PMMA). As illustrated in FIGS. 2 and 3, the light guide plate 19 has a plate shape with a thickness larger than the thickness of the optical member 15. The light guide plate 19 has a horizontally-long rectangular shape in a plan view similar to those of the liquid crystal panel 11 and the chassis 14. The long sides and the short sides of the plate surface correspond with the X-axis direction and the Y-axis direction, respectively. The thickness direction of the light guide plate 19 perpendicular to the plate surface corresponds with the Z-axis direction. As illustrated in FIGS. 4 and 5, the light guide plate 19 is disposed below the liquid crystal panel 11 and the optical member 15 in the chassis 14. One of the long end surfaces of the peripheral end surface (on the near side in FIGS. 2 and 3, the left side in FIG. 4) is opposed to the LEDs 17 on the LED board 18 at one of the long sides of the chassis 14. The arrangement direction of the LEDs 17 (the LED board 18) and the light guide plate 19 corresponds with the Y-axis direction. The arrangement direction of the optical member 15 (the liquid crystal panel 11) and the light guide plate 19 corresponds with the Z-axis direction. The arrangement directions are perpendicular to each other. The light guide plate 19 has a function such that the light rays emitted by the LEDs 17 in the Y-axis direction enter the light guide plate 19, travel through the light guide plate 19, and exit toward the optical member 15 (the front side). The thickness (a dimension in the Z-axis direction) of the light guide plate 19 is larger than a height (a dimension in the Z-axis direction) of the LEDs 17.

As illustrated in FIGS. 4 and 5, one of the plate surfaces of the light guide plate 19 on the front side is a light exiting plate surface 19a (a light exiting surface) through which the light rays exit the light guide plate 19 toward the optical member 15 and the liquid crystal panel 11. A long side section of the peripheral portion of the light guide plate 19 elongated in the X-axis direction (the arrangement direction of the LEDs 17, the longitudinal direction of the LED board 18) is the light entering end surface 19b (a light entering surface) through which the light rays emitted by the LEDs 17 via the wavelength converter 20. Because the light entering end surface 19b is opposed to the LEDs 17, the light entering end surface 19b may be referred to as an LED opposed end surface (a light source opposed end surface). The light entering end surface 19b is a surface parallel to the X-axis direction and the Z-axis direction and substantially perpendicular to the light exiting plate surface 19a. The rest of sections of the peripheral portion of the light guide plate 19 (the other long side section and a pair of short side sections) include non-light entering end surfaces 19d through which the light rays emitted by the LEDs 17 do not directly enter. Because the non-light entering end surfaces 19d are not opposed to the LEDs 17, the non-light entering end surfaces 19d may be referred to as LED non-opposed end surfaces (light source non-opposed end surfaces). The non-light entering end surfaces 19d include a non-light entering opposite end surface 19d1 and a pair of non-light entering end surface 19d2. The non-light entering opposite end surface 19d1 is included in the other long side section of the peripheral portion of the light guide plate 19, that is, the long side section on an opposite side from the long side section including the light entering end surface 19b. The non-light entering end surfaces 19d2 are included in the short side sections adjacent to the long side sections that include the light entering end surface 19b and the non-light entering opposite end surface 19d1. In this section, the LED non-opposed end surface may be referred to as the non-light entering end surface 19d; however, it does not mean that no light rays enter the non-light entering end surface 19d. If light rays that leak from the non-light entering end surface 19d to the outside may be reflected by the side portion 14c of the chassis 14 toward the light guide plate 19, the reflected light rays may enter the non-light entering end surface.

As illustrated in FIGS. 4 and 5, the reflection sheet 25 (a reflecting member) is disposed over the back surface of the light guide plate 19, that is, an opposite plate surface 19c on the opposite side from the light exiting plate surface 19a. The reflection sheet 25 is made of synthetic resin with a white surface having high light reflectivity (e.g., formed PET). The reflection sheet 25 reflects the light rays that travel through the light guide plate 19 and reach the opposite plate surface 19c such that the light rays travel toward the front side, that is, toward the light exiting plate surface 19a. The reflection sheet 25 is disposed to cover a substantially entire area of the opposite plate surface 19c of the light guide plate 19. The reflection sheet 25 is extended to overlap an area in which the LED board 18 (the LEDs 17) are disposed in a plan view such that the LED board 18 (the LEDs 17) are sandwiched between the extended portion of the reflection sheet 25 and the frame shaped portion 16a of the frame 16 on the front side. The light rays from the LEDs 17 are reflected by the extended portion of the reflection sheet 25. Therefore, the light rays from the LEDs 17 efficiently enter the light entering end surface 19b. A light reflecting pattern (not illustrated) including light reflecting portions is formed on the opposite plate surface 19c of the light guide plate 19 for reflecting the light rays inside the light guide plate 19 toward the light exiting plate surface 19a so that the light rays exit through the light exiting plate surface 19a. The light reflecting portions of the light reflecting pattern are light reflecting dots. Distribution density of the light reflecting dots varies according to a distance from the light entering end surface 19b (the LEDs 17). Specifically, the distribution density of the light reflecting dots of the light reflecting portions increases as the distance from the light entering end surface 19b in the Y-axis direction increases (a distance to the non-light entering opposite end surface 19d1 decreases). The distribution density decreases as the distance from the light entering end surface 19b decreases (the distance to the non-light entering opposite end surface 19d1 increases). According to the configuration, the light rays exiting through the light exiting plate surface 19a are controlled to have even in-plane distribution.

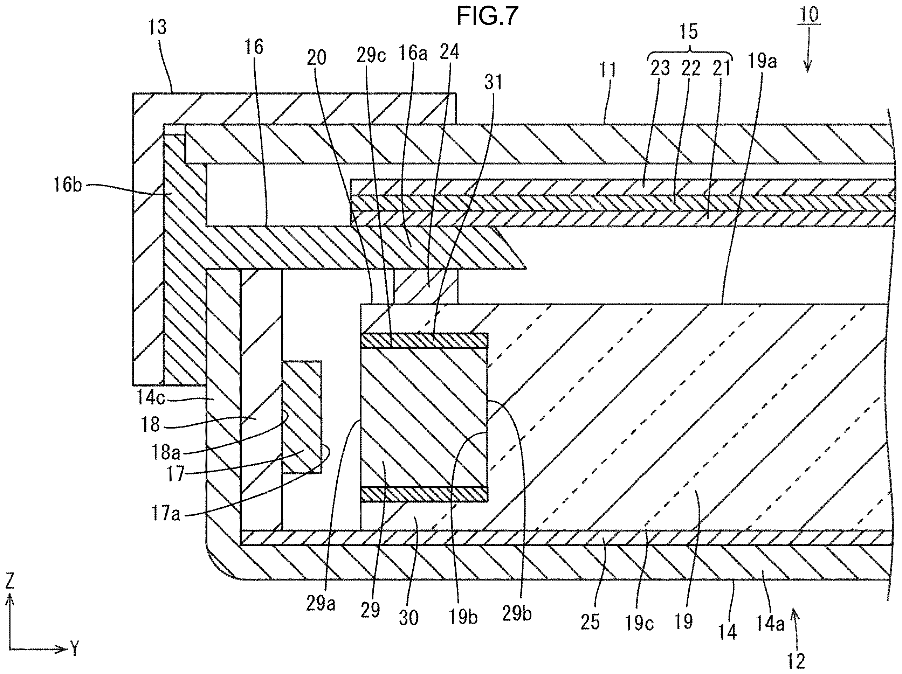

The wavelength converter 20 will be described in detail. As illustrated in FIG. 7, the wavelength converter 20 is disposed between the LEDs 17 and the light entering end surface 19b of the light guide plate 19. The wavelength converter 20 includes phosphors (wavelength converting substances) for converting light rays emitted by the LEDs 17 (the primary light rays) to the light rays with different wavelengths (the secondary light rays) through the wavelength conversion. The wavelength converter 20 is integrally provided with the light guide plate 19 such that the wavelength converter 20 is in direct contact with the light entering end surface 19b of the light guide plate 19. According to the configuration, the light rays emitted by the LEDs 17 pass through the wavelength converter 20 that is disposed between the LEDs 17 and the light entering end surface 19b and the wavelengths of the light rays are converted while passing through the wavelength converter 20. Then, the light rays enter the light guide plate 19 through the light entering end surface 19b, travel through the light guide plate 19, and exit the light guide plate 19 through the light exiting plate surface 19a. Because the wavelength converter 20 is disposed between the LEDs 17 and the light entering end surface 19b of the light guide plate 19, a smaller amount of the phosphors is required and thus the production cost can be reduced in comparison to a configuration in which a wavelength converter is disposed over the light exiting plate surface 19a or the opposite plate surface 19c of the light guide plate 19. Furthermore, the wavelength converter 20 is integrally provided with the light guide plate 19 such that the wavelength converter 20 is in direct contact with the light entering end surface 19b. Therefore, an air layer is less likely to be formed between the wavelength converter 20 and the light entering end surface 19b. According to the configuration, the light rays that have passed through the wavelength converter 20 are less likely to be improperly refracted when entering the light entering end surface 19b. The light entering efficiency to the light entering end surface 19b improves and thus high light use efficiency can be achieved.

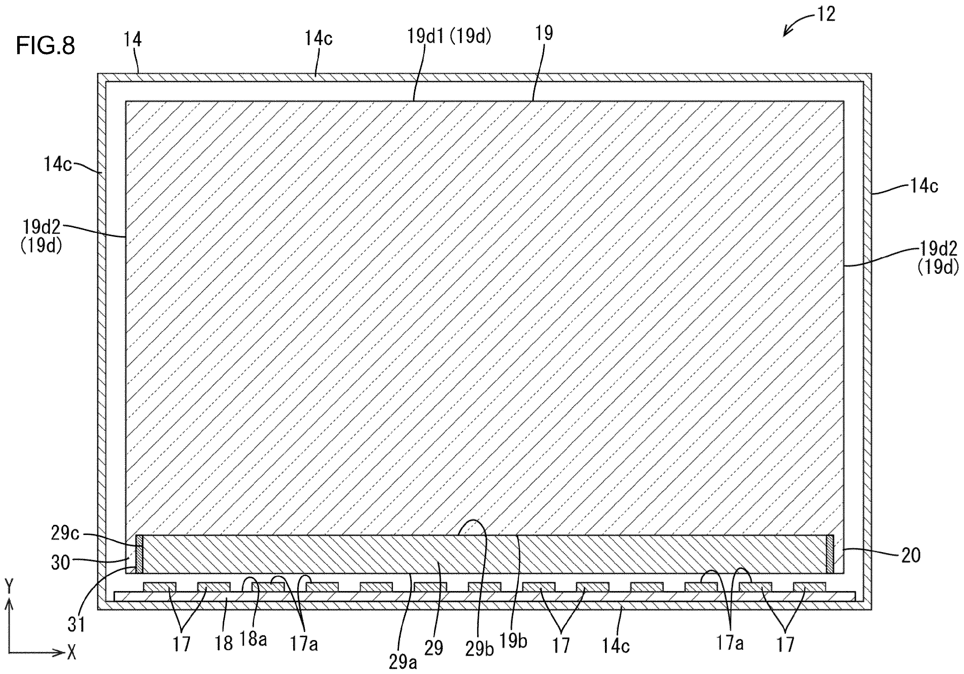

Specifically, as illustrated in FIGS. 7 and 8, the wavelength converter 20 extends in the longitudinal direction of the light entering end surface 19b of the light guide plate 19 (the X-axis direction). The wavelength converter 20 is opposed to the light entering end surface 19b for about an entire length of the light entering end surface 19b and to all the LEDs 17 mounted on the LED board 18. The wavelength converter 20 has a length (a dimension in the X-axis direction) and a height (a dimension in the Z-axis direction) about equal to the long dimension of the light guide plate 19 and the thickness of the light guide plate 19, respectively. The wavelength converter 20 is disposed such that an inner edge thereof is located outer than an inner edge of the frame shaped portion 16a of the frame 16 with respect to the width direction (the Y-axis direction). Namely, an entire area of the wavelength converter 20 in the plan view overlaps the frame shaped portion 16a of the frame 16. Therefore, a user of the liquid crystal display device 10 is less likely to directly see the wavelength converter 20 from the front side.

As illustrated in FIGS. 7 and 8, the wavelength converter 20 includes a phosphor containing portion 29 (a wavelength converting substance containing portion), a holding portion 30, and a reflection layer 31. The phosphor containing portion 29 contains the phosphors (the wavelength converting substances) for converting wavelengths of the light rays from the LEDs 17. The holding portion 30 holds the phosphor containing portion 29. The reflection layer 31 reflects the light rays in the wavelength converter 20. Red phosphors and green phosphors are dispersed in the phosphor containing portion 29. The red phosphors and the green phosphors emit red light rays (visible light rays in a specific wavelength range belonging to red) and green light rays (visible light rays in a specific wavelength range belonging to green), respectively, when excited by the light rays in a single color of blue from the LEDs 17. Through the wavelength conversion, the wavelength converter 20 converts the light rays emitted by the LEDs 17 (the blue light rays, the primary light rays) to the secondary light rays (the green light rays and the red light rays) which exhibit a color that makes a complementary color pair with the color of the primary light rays (blue). The phosphor containing portion 29 is prepared by filling the holding portion 30 with an ultraviolet curable resin material in which the red phosphors and the green phosphors are dispersed and curing the ultraviolet curable resin through application of ultraviolet rays.

More specifically, the phosphors contained in the phosphor containing portion 29 are all excited by the blue light rays and have the following light emitting spectra. The green phosphors emit light rays in a green wavelength range (about 500 nm to 570 nm), that is, green light rays when excited by the blue light rays. It is preferable that the green phosphors have a light emitting spectrum of a peak wavelength of about 530 nm in the green wavelength range and a half width smaller than 40 nm. The red phosphors emit light rays in a red wavelength range (about 600 nm to 780 nm), that is, red light rays when excited by the blue light rays. It is preferable that the red phosphors have a light emitting spectrum of a peak wavelength of about 610 nm in the red wavelength range and a half width smaller than 40 nm.

The phosphors are down conversion type (down shifting type) phosphors, that is, the exciting wavelength is shorter than fluorescence wavelengths. The down conversion type phosphors convert exciting light rays having shorter wavelengths and higher energy to fluorescence light rays having longer wavelengths and lower energy. In comparison to a configuration in which up conversion type phosphors having exiting wavelengths longer than fluorescent wavelengths are used (quantum efficiency of about 28 %, for instance), quantum efficiency (light conversion efficiency) is higher, which is about 30 % to 50 %. The phosphors are quantum dot phosphors. The quantum dot phosphors have discrete energy levels obtained through all-around enclosure of electrons, positive holes, and exciters in nanosized semiconductor crystals (a diameter range of 2 nm to 10 nm) in three-dimensional spaces. By altering the dot size, the peak wavelength of the emitting light rays (color of emitting light rays) can be set as appropriate. The emitting light rays (fluorescent light rays) from the quantum dot phosphors have sharp peaks in the light emitting spectra and thus narrow half widths. Therefore, purity of the colors is significantly high and a color range is wide. A material of the quantum dot phosphors may be a combination of an element that can take a divalent cation such as Zn, Cd, Hg, and Pb and an element that can take a divalent anion such as O, S, Se, and Te (e.g., cadmium selenide (CdSe), zinc sulfide (ZnS)), a combination of an element that can take a trivalent citation such as Ga and In and an element that can take a trivalent anion such as P, As, and Sb (e.g., indium phosphide (InP), gallium arsenide (GaAs)), or a chalcopyrite compound (e.g., CuInSe₂). In this embodiment, CdSe and ZnS are used for the materials of the quantum dot phosphors. The quantum dot phosphors used in this embodiment are so-called core-shell type quantum dot phosphors. The core-shell type quantum dot phosphors have a configuration in which quantum dots are covered with shells that are made of semiconductor substance having a relatively large band gap. Specifically, it is preferable to use Lumidot (registered trademark) CdSe/ZnS manufactured by Sigma-Aldrich Japan K.K. for the core-shell type quantum dot phosphors.

As illustrated in FIGS. 7 and 8, the phosphor containing portion 29 has a size to cover an entire mounting area of the LED board 18 in which the LEDs 17 are disposed with respect to the X-axis direction and to cover an entire light emitting surfaces 17a of the LEDs 17 with respect to the Z-axis direction. The phosphor containing portion 29 includes a light entering surface 29a, a light exiting surface 29b, and an annular surface 29c. The light entering surface 29a faces straight to the light emitting surfaces 17a of the LEDs 17. The light exiting surface 29b faces straight to the light entering end surface 19b of the light guide plate 19. The annular surface 29c having an annular shape is adjacent to the light entering surface 29a and the light exiting surface 29b. The light entering surface 29a of the phosphor containing portion 29 has a flat shape parallel to the light exiting surfaces 17a of the LEDs 17 and the mounting surface 18a of the LED board 18. The light entering surface 29a extends for entire dimensions of the LED board 18 in the X-axis direction and the Z-axis direction. The light rays emitted by the LEDs 17 mounted on the LED board 18 efficiently enter the light entering surface 29a. A certain gap is provided between the light entering surface 29a and the light exiting surface 17a of each LED 17. The light exiting surface 29b has a flat shape parallel to the light entering end surface 19b of the light guide plate 19. The light exiting surface 29b extends for entire dimension of the light entering end surface 19b of the light guide plate 19 in the X-axis direction and the Z-axis direction. The light exiting through the light exiting surface 29b efficiently enter the light guide plate 19 through the light entering end surface 19b. The annular surface 29c is substantially perpendicular to the light entering surface 29a (the light exiting surfaces 17a of the LEDs 17) and the light exiting surface 29b (the light entering end surface 19b of the light guide plate 19) and parallel to the Y-axis direction corresponding with the direction normal to at least the light entering surface 29a and the light exiting surface 29b. The annular surface 29c are formed by connecting long side portions parallel to the X-axis direction (the long sides of the light entering end surface 19b) and the Y-axis direction and long side portions parallel to the Z-axis direction (the short sides of the light entering end surface 19b) and the Y-axis direction, respectively.

As illustrated in FIGS. 7 and 8, the holding portion 30 surrounds the phosphor containing portion 29 along the annular surface 29c and holds the phosphor containing portion 29. With the holding portion 30, a positional relationship between the light entering end surface 19b of the light guide plate 19 and the phosphor containing portion 29 (specifically, the positional relationship between them in the X-axis direction and the Z-axis direction along the light entering end surface 19b) can be stabilized. The holding portion 30 is made of glass material that is the same material as that of the light guide plate 19 and integrally formed with the light guide plate 19. The light guide plate 19 includes a recess in the long edge section of the peripheral portion on the LED 17 side. The recess has an opening on the LED 17 side. Edge portions of the recess defining an internal space of the recess are configured as the holding portion 30. The internal space of the recess is filled with the phosphor containing portion 29 and thus the wavelength converter 20 is integrally provided with the light guide plate 19. The positional relationship between the light entering end surface 19b of the light guide plate 19 and the phosphor containing portion 29 are stabilized with high accuracy. Moisture proof properties of the phosphor containing portion 29 are properly maintained. Therefore, the green phosphors and the red phosphors are less likely to be degraded due to absorption of moisture. The holding portion 30 has a short drum shape along the annular surface 29c of the phosphor containing portion 29 to surround the phosphor containing portions 29 for the entire periphery. The holding portion 30 does not overlap the light entering surface 29a and the light exiting surface 29b of the phosphor containing portion 29. The light entering surface 29a directly faces straight to the LEDs 17 without the holding portion 30 therebetween. The light exiting surface 29b faces straight to the light entering end surface 19b without a gap. Namely, the light exiting surface 29b is in direct contact with the light entering end surface 19b without the holding portion 30 therebetween.

The reflection layer 31 is made of material that exhibits white and has high light reflectivity (e.g., titanium). As illustrated in FIGS. 7 and 8, the reflection layer 31 is disposed at an outer side of the phosphor containing portion 29 along the annular surface 29c to reflect the light rays. The light rays passing through the phosphor containing portion 29 are reflected by the reflection layer 31 and thus less likely to leak to the outside of the reflection layer 31. The light rays are efficiently directed to the light exiting surface 29b. According to the configuration, light entering efficiency to the light entering end surface 19b of the light guide plate 19 increases and thus the light use efficiency further increases. Because the reflection layer 31 has a closed-end annular shape such that the reflection layer 31 is disposed to extend for the entire circumferences of the annular surface 29c of the phosphor containing portion 29, the reflecting layer 31 reflects the light rays that pass through the phosphor containing portion 29 without any leaks and efficiently directs the light rays to the light exiting surface 29b. The reflection layer 31 is disposed between the phosphor containing portion 29 and the holding portion 30. Namely, the reflection layer 31 is in direct contact with the annular surface 29c of the phosphor containing portion 29 and surrounded by the holding portion 30 from the outer side. The reflection layer 31 is formed for the entire periphery of the holding portion 30 with direct contact with an internal surface of the holding portion 30 and to surround the annular surface 29c of the phosphor containing portion 29 from the outer side for the entire periphery. According to the configuration, the light rays passing through the phosphor containing portion 29 are reflected by the reflection layer 31 before entering the holding portion 30. Therefore, the light rays passing through the phosphor containing portion 29 are efficiently directed to the light exiting surface 29b. The light use efficiency further increases.

The present invention has the configuration described above. Functions and operation will be described. When the liquid crystal display device 10 having the above configuration is turned on, driving of the liquid crystal panel 11 is controlled by a panel control circuit on the control board that is not illustrated. The drive power is supplied from an LED drive circuit on an LED drive circuit board that is not illustrated to the LEDs 17 on the LED board 18 and the driving of the LEDs 17 are controlled. The light rays from the LEDs 17 are guided by the light guide plate 19 and directed to the liquid crystal panel 11 via the optical member 15. As a result, predetermined images are displayed on the liquid crystal panel 11. Next, functions and operation of the backlight unit 12 will be described.

When the LEDs 17 are turned on, the blue light rays emitted by the LEDs 17 (the primary light rays) enter the wavelength converter 20 through the light entering surface 29a of the phosphor containing portion 29 as illustrated in FIG. 4. The blue light rays are converted into the green light rays and the red light rays (the secondary light rays) through the wavelength conversion by the green phosphors and the red phosphors contained in the phosphor containing portion 29. Substantially white illumination light is obtained from the green light rays and the red light rays obtained through the wavelength conversion. The green light rays and the red light rays obtained through the wavelength conversion by the phosphor containing portion 29 and the blue light rays obtained without the wavelength conversion exit the phosphor containing portion 29 through the light exiting surface 29b and enter the light guide plate 19 through the light entering end surface 19b. The light rays that have entered through the light entering end surface 19b may be totally reflected at an interface between the light guide plate 19 and the external air layer or reflected by the reflection sheet 25 to travel through the light guide plate 19. The light rays are reflected and diffused by the light reflectors of the light reflection pattern. Incidences of the light rays to the light exiting plate surface 19a are smaller than a critical angle and thus the light rays are more likely to exit through the light exiting plate surface 19a. The optical effects are exerted on the light rays exit the light guide plate 19 through the light exiting plate surface 19a while passing through the optical member 15. The light rays on which the optical effects are exerted are applied to the liquid crystal panel 11. Some of the light rays are retroreflected by the optical member 15 and returned to the light guide plate 19. The retroreflected light rays exit the light guide plate 19 through the light exiting plate surface 19a and are included in light exiting from the backlight unit 12.

Functions and operation of the wavelength converter 20 will be described in detail. As illustrated in FIGS. 7 and 8, some of the blue light rays emitted by the LEDs 17 (the primary light rays) and having entered the wavelength converter 20 through the light entering surface 29a of the phosphor containing portion 29 excite the green phosphors and the red phosphors dispersed in the phosphor containing portion 29. As a result, the green light rays and the red light rays (the secondary light rays) are emitted by the green phosphors and the red phosphors. The light rays that have passed through the phosphor containing portion 29 (including some of the primary light rays and some of the secondary light rays) and reached the annular surface 29c (a peripheral surface) of the phosphor containing portion 29 are reflected by the reflection layer 31 and thus travel through the phosphor containing portion 29 without leaking to the holding portion 30 side. If the light rays in the phosphor containing portion 29 (the secondary light rays obtained through the wavelength conversion by the phosphors) leak to the holding portion 30 side, the light rays are not totally reflected by the outer surface of the holding portion 30 and leak to the outside. The light rays may not be effectively used by the light guide plate 19. By reflecting the light rays inside the phosphor containing portion 29 by the reflection layer 31 as described above, the reflected light rays are efficiently directed to the light exiting surface 29b of the phosphor containing portion 29. According to the configuration, the light entering efficiency of the light rays from the light exiting surface 29b of the phosphor containing portion 29 and entering to the light guide plate 19 through the light entering end surface 19b increases. The wavelength converter 20 is integrally provided with the light guide plate 19 such that the light exiting surface 29b of the phosphor containing portion 29 is in direct contact with the light entering end surface 19b of the light guide plate 19. Therefore, the air layer is not formed between the light exiting surface 29b of the phosphor containing portion 29 and the light entering end surface 19b of the light guide plate 19. The light rays from the light exiting surface 29b of the phosphor containing portion 29 entering the light guide plate 19 through the light entering end surface 19b are less likely to be improperly refracted by the air layer. Therefore, the light entering efficiency to the light entering end surface 19b of the light guide plate 19 increases and high light use efficiency is achieved. The phosphor containing portion 29 is integrally formed with the light guide plate 19 and held by the holding portion 30 that is made of the same glass material. Therefore, the positional relationship between the light entering end surface 19b of the light guide plate 19 and the phosphor containing portion 29 with respect to the X-axis direction and the Z-axis direction (the direction normal to the light entering end surface 19b and the light exiting surface 29b) is stabilized. The light entering efficiency further increases. The phosphors contained in the phosphor containing portion 29 are further less likely to be degraded due to absorption of moisture.

As described above, the backlight unit 12 (a lighting device) according to this embodiment includes the LEDs 17 (the light sources), the light guide plate 19, and the wavelength converter 20. The light guide plate 19 includes the light entering end surface 19b and the light exiting plate surface 19a. The light entering end surface 19b is at least a section of the peripheral end surface. The light rays from the LEDs 17 enter the light entering end surface 19b. The light exiting plate surface 19a is one of the plate surfaces of the light guide plate 19. The light rays exit the light guide plate 19 through the light exiting plate surface 19a. The wavelength converter 20 is disposed between the LEDs 17 and the light entering end surface 19b. The wavelength converter 20 includes the phosphors for the wavelength conversion. The wavelength converter 20 is integrally provided with the light guide plate 19 such that the wavelength converter 20 is in direct contact with the light entering end surface 19b.

The light rays emitted by the LEDs 17 enter the light guide plate 19 through the light entering end surface 19b after passing through the wavelength converter 20 that is disposed between the LEDs 17 and the light entering end surface 19b and the wavelength conversion is performed on the light rays. The light rays pass through the light guide plate 19 and exit the light guide plate 19 through the light exiting plate surface 19a. The wavelength converter 20 is disposed between the LEDs 17 and the light entering end surface 19b of the light guide plate 19. In comparison to a configuration in which the wavelength converter 20 is disposed to overlap the plate surface of the light guide plate 19, the smaller amount of the phosphors are required and thus the production cost can be reduced. The wavelength converter 20 is integrally provided with the light guide plate 19 such that the wavelength converter 20 is in direct contact with the light entering end surface 19b. Therefore, the air layer is less likely to be formed between the wavelength converter 20 and the light entering end surface 19b. According to the configuration, the light rays that have passed through the wavelength converter 20 are less likely to be improperly refracted when entering the light entering end surface 19b. Therefore, the light entering efficiency to the light entering end surface 19b increases and thus high light use efficiency is achieved.

The wavelength converter 20 includes at least the phosphor containing portion 29 and the reflection layer 31. The phosphor containing portion 29 contains the phosphors. The phosphor containing portion 29 includes the light entering surface 29a, the light exiting surface 29b, and the annular surface 29c. The light entering surface 29a faces straight to the LEDs 17. The light exiting surface 29b faces straight to the light entering end surface 19b. The annular surface 29c having the annular shape is adjacent to the light entering surface 29a and the light exiting surface 29b. The reflection layer 31 is disposed on the outer side of the phosphor containing portion 29 along at least a section of the annular surface 29c. The reflection layer 31 is configured to reflect the light rays. According to the configuration, the light rays from the LEDs 17 enter the phosphor containing portion 29 through the light entering surface 29a and exit the phosphor containing portion 29 through the light exiting surface 29b. Then, the light rays enter the light guide plate 19 through the light entering end surface 19b. The light rays passing through the phosphor containing portion 29 are reflected by the reflection layer 31 that is disposed on the outer side of the phosphor containing portion 29 along at least the section of the annular surface 29c. Therefore, the light rays are less likely to leak to the outside of the reflection layer 31 and efficiently directed to the light exiting surface 29b. According to the configuration, the light entering efficiency to the light entering end surface 19b of the light guide plate 19 further increases and thus the light use efficiency further increases.

The wavelength converter 20 includes at least the phosphor containing portion 29 that contains the phosphors and the holding portion 30 that holds the phosphor containing portion 29. The phosphor containing portion 29 includes the light entering surface 29a, the light exiting surface 29b, and the annular surface 29c. The light entering surface 29a faces straight to the LEDs 17. The light exiting surface 29b faces straight to the light entering end surface 19b. The annular surface 29c having the annular shape are adjacent to the light entering surface 29a and the light exiting surface 29b. According to the configuration, the light rays from the LEDs 17 enter the phosphor containing portion 29 through the light entering surface 29a, exit the phosphor containing portion 29 through the light exiting surface 29b, and enter the light guide plate 19 through the light entering end surface 19b. The holding portion 30 surrounds the phosphor containing portion along at least the annular surface 29c and holds the phosphor containing portion 29. Therefore, the positional relationship between the light entering end surface 19b of the light guide plate 19 and the phosphor containing portion 29 can be stabilized.

The wavelength converter 20 includes the reflection layer 31 disposed on the outer side of the phosphor containing portion 29 along at least the section of the annular surface 29c and configured to reflect the light rays. The reflection layer 31 is disposed between the phosphor containing portion 29 and the holding portion 30. According to the configuration, the light rays from the LEDs 17 enter the phosphor containing portion 29 through the light entering surface 29a, exit the phosphor containing portion 29 through the light exiting surface 29b, and enter the light guide plate 19 through the light entering end surface 19b. The light rays passing through the phosphor containing portion 29 are reflected by the reflection layer 31 that is disposed on the outer side of the phosphor containing portion 29 along at least the section of the annular surface 29c. Therefore, the light rays are less likely to leak to the outside of the reflection layer 31 and efficiently directed to the light exiting surface 29b. The light entering efficiency to the light entering end surface 19b of the light guide plate 19 and thus the light use efficiency further increases. The reflection layer 31 is disposed between the phosphor containing portion 29 and the holding portion 30. Therefore, the light rays passing through the phosphor containing portion 29 are reflected by the reflection layer 31 before entering the holding portion 30. The light rays passing through the phosphor containing portion 29 are further efficiently directed to the light exiting surface 29b and thus the light use efficiency further increases.

The holding portion 30 is integrally formed with the light guide plate 19. According to the configuration, the positional relationship between the light entering end surface 19b of the light guide plate 19 and the phosphor containing portion 29 is stabilized with high accuracy.

The light guide plate 19 and the holding portion 30 are made of glass material. According to the configuration, the phosphors contained in the phosphor containing portion 29 have proper levels of the moisture-proof properties. Therefore, the phosphors are less likely to be degraded due to absorption of moisture.

The wavelength converter 20 contains the quantum dot phosphors. According to the configuration, efficiency in the wavelength conversion by the wavelength converter 20 increases and the purity of the colors obtained through the wavelength conversion increases.

The liquid crystal display device 10 according to this embodiment includes the backlight unit 12 described above, and the liquid crystal panel 11 (the display panel) configured to display images using the light from the backlight unit 12. According to the liquid crystal display device 10 including the backlight unit 12 that is produced at low cost, the production cost of the liquid crystal display device 10 can be reduced.

The television device 10TV according to this embodiment includes the liquid crystal display device 10 described above. According to the television device 10TV including the liquid crystal display device 10 that is produced at low cost, the production cost of the television device 10TV can be reduced.

### <Second Embodiment>

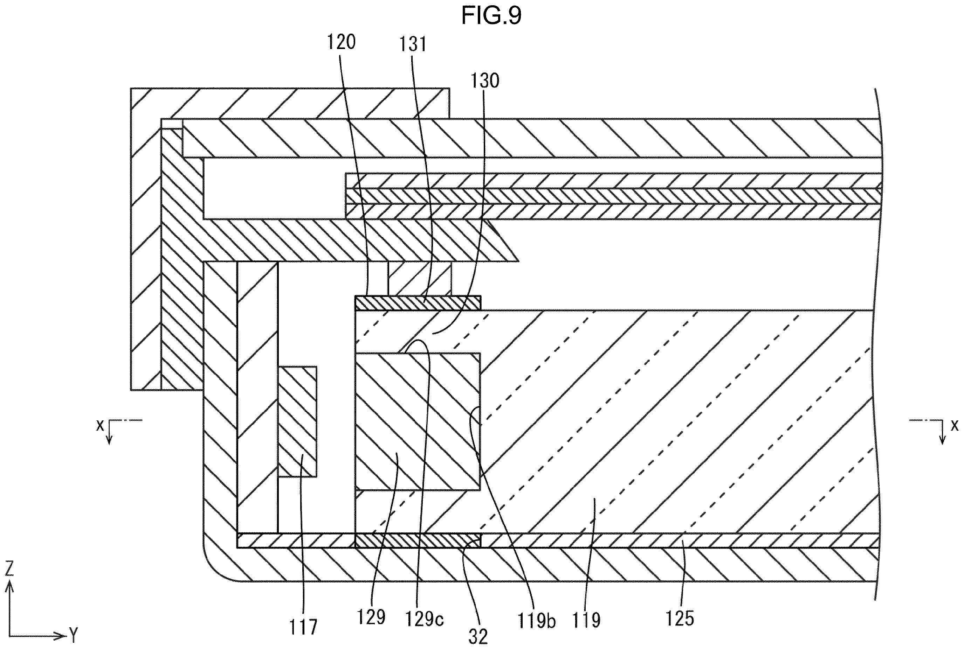

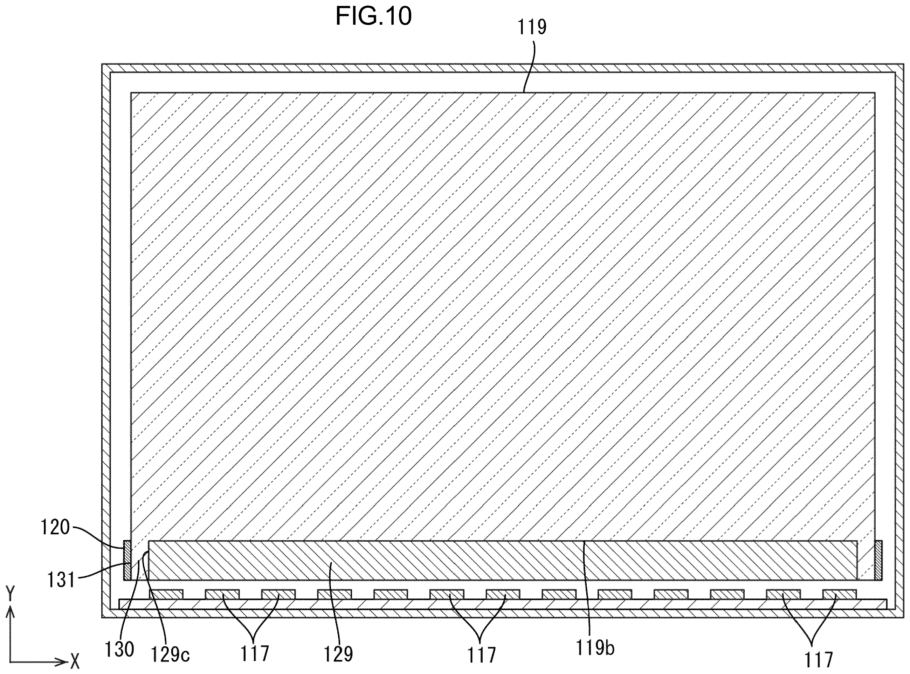

A second embodiment of the present invention will be described with reference to FIGS. 9 and 10. The second embodiment includes a reflection layer 131 that are configured and arranged differently from that of the first embodiment. Configurations, functions, and effects similar to those of the first embodiment will not be described.

As illustrated in FIGS. 9 and 10, a wavelength converter 120 in this embodiment includes a holding portion 130 and the reflection layer 131 that is in contact with a surface of the holding portion 130 on an opposite side from a phosphor containing portion 129. In the wavelength converter 120, the holding portion 130 is disposed on an immediate outer side of the phosphor containing portion 129 to surround the phosphor containing portion 129. The holding portion 130 includes an inner periphery that is in direct contact with an annular surface 129c of the phosphor containing portion 129. The reflection layer 131 is not disposed between the holding portion 130 and the phosphor containing portion 129. The reflection layer 131 is disposed on an immediate outer side of the holding portion 130 to surround the holding portion 130. The reflection layer 131 is in direct contact with an outer periphery of the holding portion. The reflection layer 131 has a closed-end annular shape such that the reflection layer 131 surrounds the outer periphery of the holding portion 130 for the entire circumference of the holding portion 130. According to the configuration, the reflection layer 131 can be easily formed on the outer side of the holding portion 130 in the production. In a space surrounded by the holding portion 130 (a recess formed in a long edge portion of an outer peripheral portion of a light guide plate 119 on an LED 117 side), the reflection layer 131 is not required and only the phosphor containing portion 129 is provided. This configuration has an advantage in the production of the light guide plate 119 and the wavelength converter 120. A reflection sheet 125 includes an opening 32 to receive a portion of the reflection layer 131 disposed behind the holding portion 130.

The light rays emitted by LEDs 117 travel from the phosphor containing portion 129 to the holding portion 130 during passing through the wavelength converter 120. The light rays are reflected by the reflection layer 131 that surrounds the outer periphery of the holding portion 130 and returned to the phosphor containing portion 129. Therefore, the light rays are less likely to leak to the outside of the holding portion 130 and thus efficiently enter the light guide plate 119 through a light entering end surface 119b.

As described above, according to this embodiment, the wavelength converter 120 includes the reflection layer 131 disposed on the outer side of the phosphor containing portion 129 along at least the section of the annular surface 129c and configured to reflect the light rays. The reflection layer 131 is in contact with the surface of the holding portion 130 on the opposite side from the phosphor containing portion 129 side. According to the configuration, the light rays from the LEDs 117 enter the phosphor containing portion 129 through a light entering surface 129a, exit the phosphor containing portion 129 through a light exiting surface 129b, and enter the light guide plate 119 through the light entering end surface 119b. The light rays passing through the phosphor containing portion 129 are reflected by the reflection layer 131 that is disposed on the outer side of the phosphor containing portion 129 along at least the section of the annular surface 129c. Therefore, the light rays are less likely to leak to the outside of the reflection layer 131 and efficiently directed to the light exiting surface 129b. According to the configuration, the light entering efficiency to the light entering end surface 119b of the light guide plate 119 further increases and the light use efficiency further increases. The reflection layer 131 is in contact with the surface of the holding portion 130 on the opposite side from the phosphor containing portion 129 side. Because the reflection layer 131 can be easily formed, this configuration has an advantage in the production.

### <Third Embodiment>

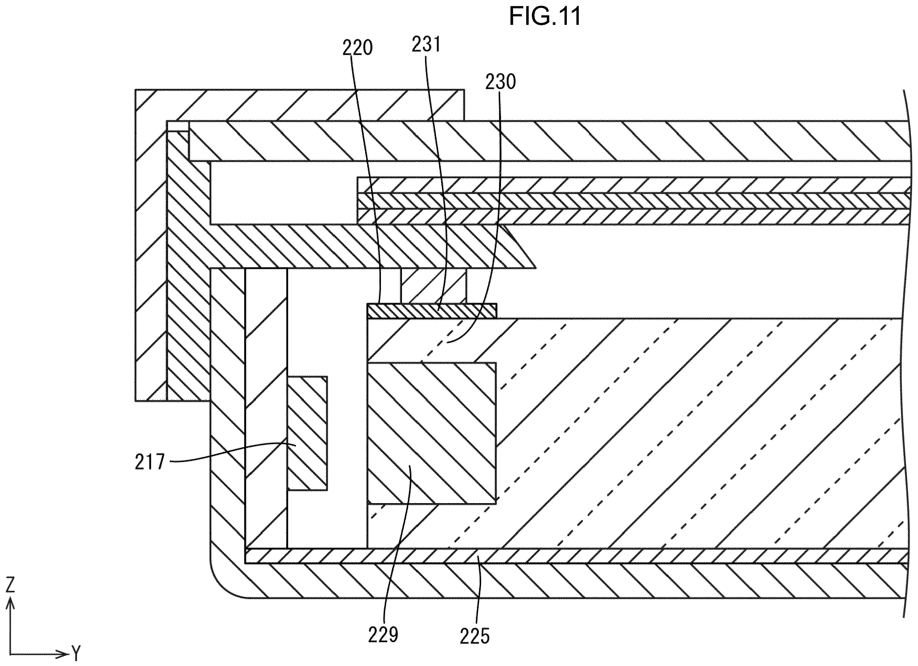

A third embodiment of the present invention will be described with reference to FIG. 11. The third embodiment includes a reflection layer 231 and a reflection sheet 225 having configuration different from those of the second embodiment. Configurations, functions, and effects similar to those of the second embodiment will not be described.

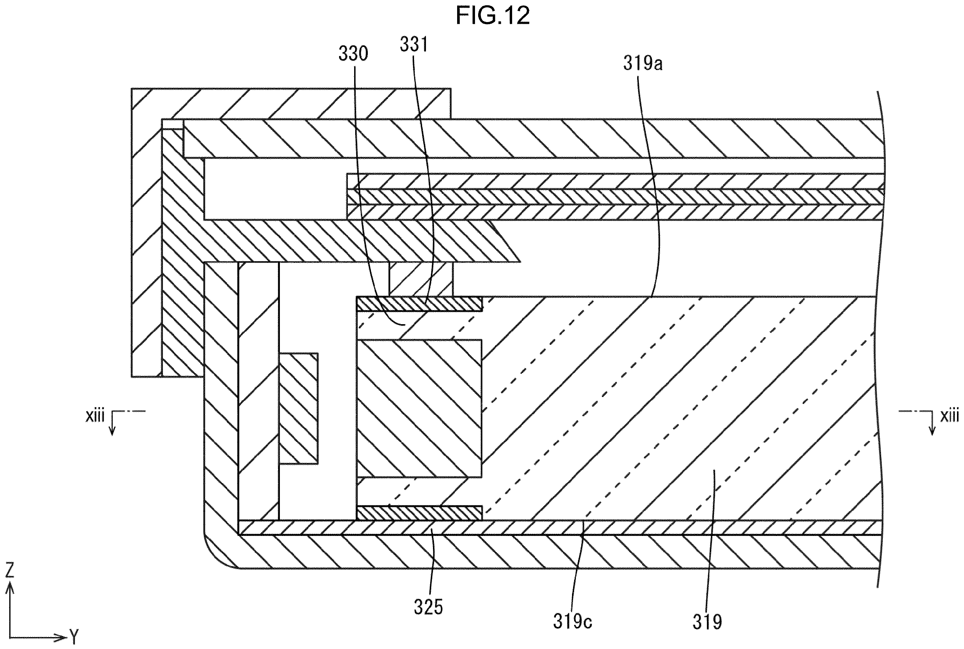

As illustrated in FIG. 11, the reflection layer 231 in this embodiment is disposed to overlap a front section and side sections of a holding portion 230 on the outer side of the holding portion 230 but not overlap a back section of the holding portion 230 on the outer side of the holding portion 230. The reflection layer 231 has a configuration as if the portion of the reflection layer 131 that extends in the X-axis direction to overlap the holding portion 230 on the back side in the second embodiment is removed. The reflection sheet 225 does not include an opening such as an opening 32 in the second embodiment. A portion of the reflection sheet 225 overlapping a wavelength converter 220 exerts an optical function similar to the reflection layer 231. Light rays emitted by LEDs 217 travel from a phosphor containing portion 229 of the wavelength converter 220 to the back side and pass through the holding portion 230 are reflected by the portion of the reflection sheet 225 overlapping the wavelength converter 220. The light rays efficiently pass through the wavelength converter 220. The wavelength converter 220 in this embodiment has a cross section along the X-axis direction similar to that of the second embodiment in FIG. 12.

### <Fourth Embodiment>

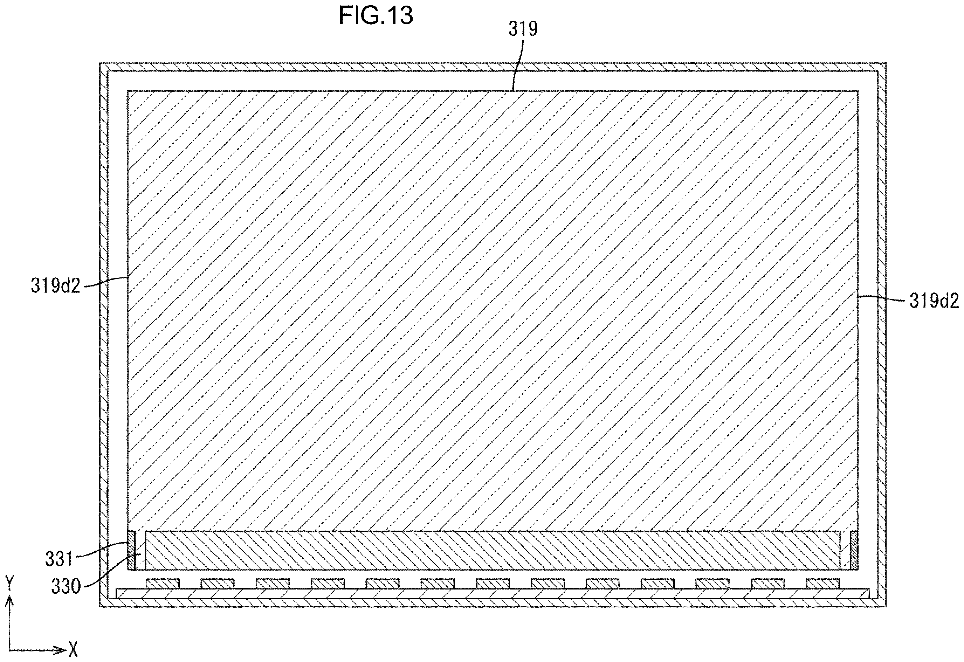

A fourth embodiment of the present invention will be described with reference to FIGS. 12 and 13. The fourth embodiment includes a holding portion 330 having a configuration different from that of the second embodiment. Configurations, functions, and effects similar to those of the second embodiment will not be described.

As illustrated in FIGS. 12 and 13, the holding portion 330 in this embodiment has an outer shape including steps that are down from surfaces of a light guide plate 319 such that an outer periphery of the holding portion 330 is disposed inner than an outer surfaces of the light guide plate 319 (a light exiting surface 319a, an opposite plate surface 319c and a pair of non-light entering-side end surfaces 319d2). A reflection layer 331 is disposed to surround the outer periphery of the holding portion 330 to overlap the holding portion 330 from the outer side. A gap between the outer periphery of the holding portion 330 and the outer surface of the light guide plate 319 is about equal to the thickness of the reflection layer 331. Therefore, the outer periphery of the reflection layer 331 is substantially flush with the outer surface of the light guide plate 319 without a gap. A reflection sheet 325 does not include an opening such as the opening 32 in the second embodiment. A portion of the reflection sheet 325 overlapping a wavelength converter 320 is disposed to directly overlap the reflection layer 331 from the outer side on the back side.

### <Fifth Embodiment>

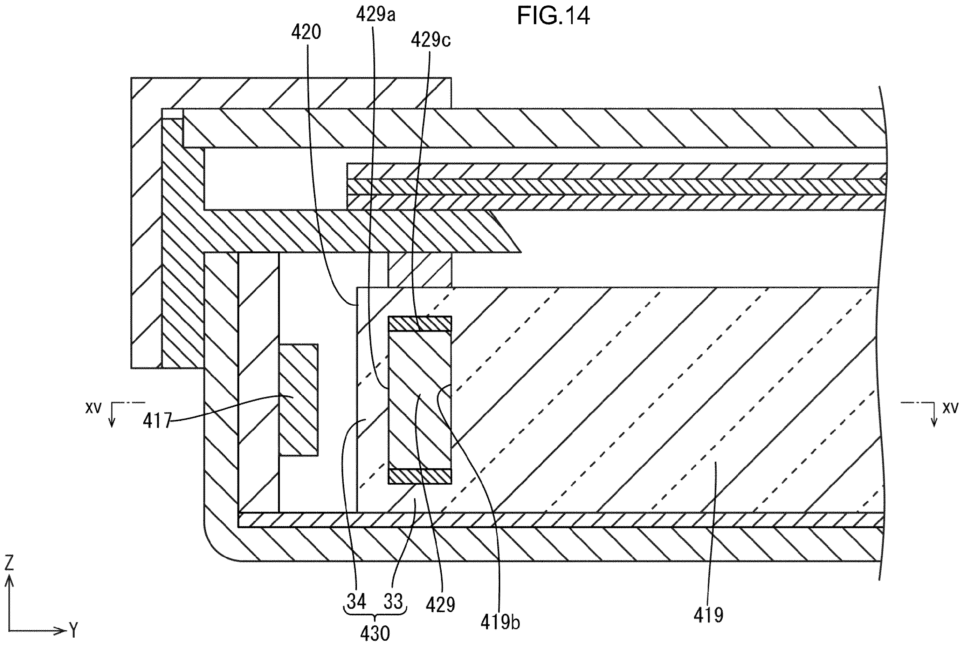

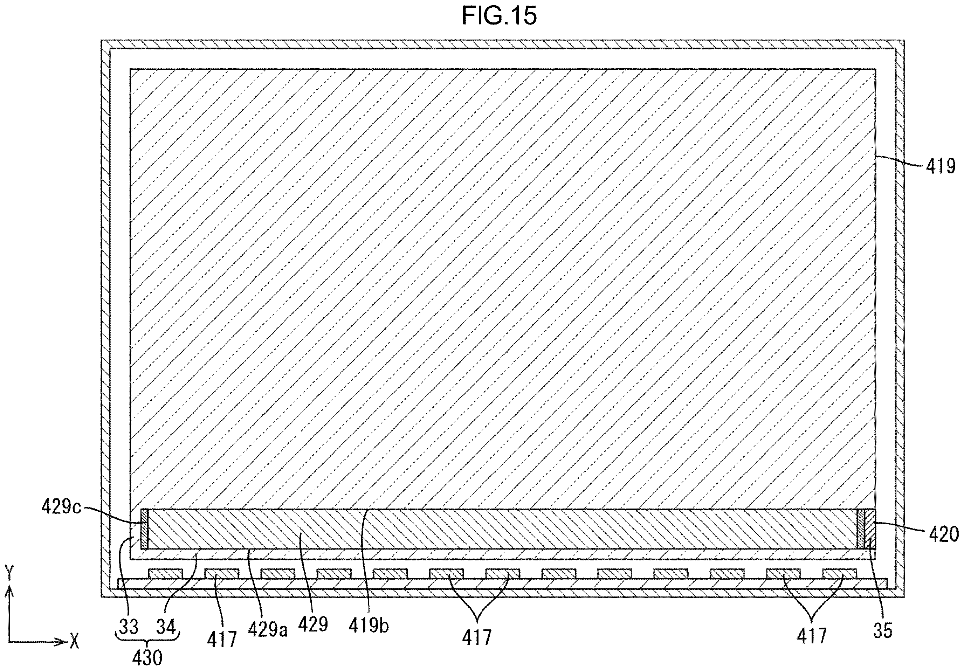

A fifth embodiment of the present invention will be described with reference to FIGS. 14 and 15. The fifth embodiment includes a holding portion 430 having a configuration different from that of the first embodiment. Configurations, functions, and effects similar to those of the first embodiment will not be described.

As illustrated in FIGS. 14 and 15, the holding portion 430 in this embodiment is integrally formed with a light guide plate 419 and disposed to surround an entire area of a phosphor containing portion 429. Specifically, the holding portion 430 includes a first holding section 33 and a second holding section 34. The first holding section 33 is disposed along an annular surface 429c of the phosphor containing portion 429 to surround the annular surface 429c for an entire circumference. The second holding section 34 is disposed along a light entering surface 429a of the phosphor containing portion 429 to cover the entire area of the light entering surface 429a. The phosphor containing portion 429 is surrounded from all directions and confined to a space defined by inner surfaces of the first holding section 33 and the second holding section 34 of the holding portion 430 and a light entering end surface 419b of the light guide plate 419. Therefore, a positional relationship between the phosphor containing portion 429 and the light entering end surface 419b of the light guide plate 419 is stabilized. A wavelength converter 420 having such a configuration is integrally formed with the light guide plate 419 by forming a hollow in a long edge section of the peripheral portion of the light guide plate 419 on an LED 417 side to open toward a side in the X-axis direction (the left side in FIG. 15) and the hollow is filled with the phosphor containing portion 429.

As described above, according to this embodiment, the holding portion 430 is provided to surround the entire area of the phosphor containing portion 429. According to the configuration, the phosphor containing portion 429 can be further stably held.

### <Sixth Embodiment>

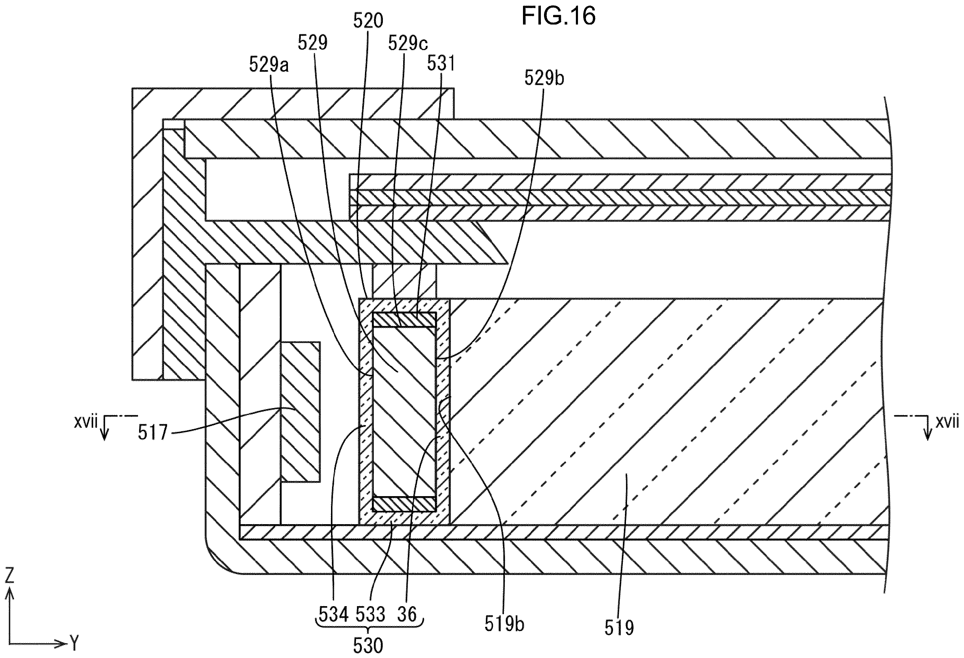

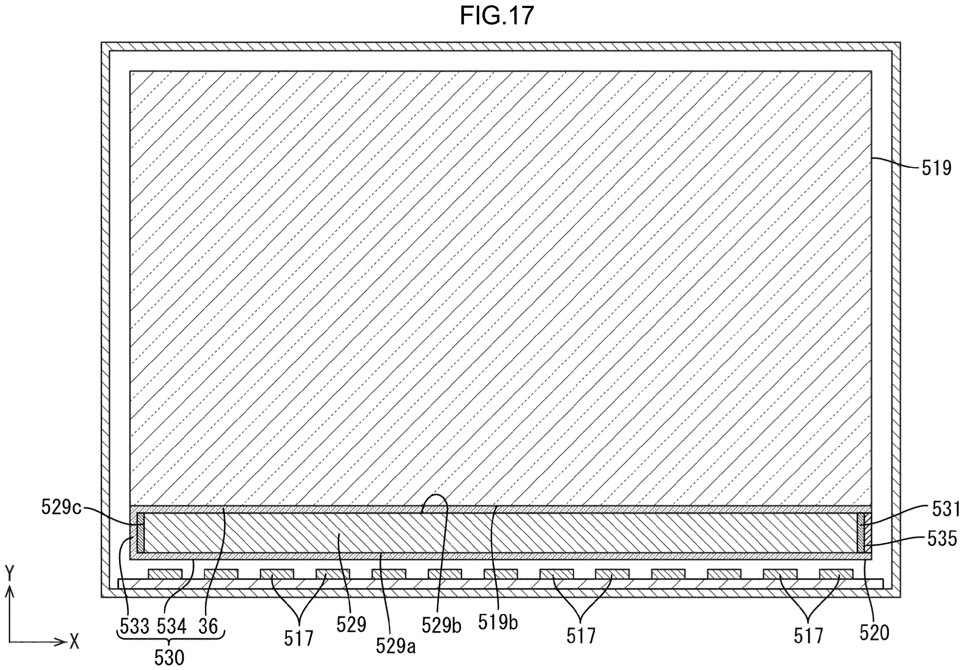

A sixth embodiment of the present invention will be described with reference to FIGS. 16 and 17. The sixth embodiment includes a wavelength converter 520 having a configuration different from that of the fifth embodiment. Configurations, functions, and effects similar to those of the fifth embodiment will not be described.

As illustrated in FIGS. 16 and 17, the wavelength converter 520 is prepared separately from a light guide plate 519 and joined to the light guide plate 519. Therefore, the wavelength converter 520 and the light guide plate 519 are provided as a single component. Specifically, the wavelength converter 520 includes a holding portion 530, a phosphor containing portion 529, and a reflection layer 531. The holding portion 530 is made of glass material similar to the light guide plate 519. The phosphor containing portion 529 is fitted in the holding portion 530. The reflection layer 531 is disposed along an annular surface 529c of the phosphor containing portion 529 between the phosphor containing portion 529 and the holding portion 530. The holding portion 530 includes a first holding section 533, a second holding section 534, and a third holding section 36. The first holding section 533 surrounds the annular surface 529c of the phosphor containing portion 529 for an entire circumference. The second holding section 534 covers an entire area of the light entering surface 529a of the phosphor containing portion 529. The third holding section 36 covers an entire area of a light exiting surface 529b of the phosphor containing portion 529. The phosphor containing portion 529 is surrounded from all directions and confined to a space defined by inner surfaces of the first holding section 533, the second holding section 534, and the third holding section 36. The third holding section 36 of the holding portion 530 is disposed between the light exiting surface 529b of the phosphor containing portion 529 and a light entering end surface 519b of the light guide plate 519. It is preferable that the glass material of the holding portion 530 and the glass material of the light guide plate 519 are the same. If so, the light rays are less likely to be improperly refracted at an interface between the holding portion 530 and the light guide plate 519. The wavelength converter 520 is integrated into the light guide plate 519 by holding the third holding section 36 of the holding portion 530 in contact with the light entering end surface 519b of the light guide plate 519 and joining the wavelength converter 520 to the light guide plate 519 through heat welding, ultrasound welding, or other types of processes. According to the configuration, a long edge section of the outer edge portion of the light guide plate 519 on an LED 517 side has a simple outer shape. Other sections of the outer edge portion also have simple outer shapes. The hollow as in the fifth embodiment is not formed. The outer shape is less likely to be complicated. The second holding section 534 of the holding portion 530 opens in part (on the left side in FIG. 17). The phosphor containing portion 529 is inserted in the holding portion 530 through the opening and an opening of the second holding section 534 is sealed with a sealing member 535 to encapsulate the phosphor containing portion 529.

As described above, according to this embodiment, the holding portion 530 is prepared separately from the light guide plate 519 and joined to the light guide plate 519. According to the configuration, the outer shape of the light guide plate 519 is less likely to be complicated.

### <Seventh Embodiment>

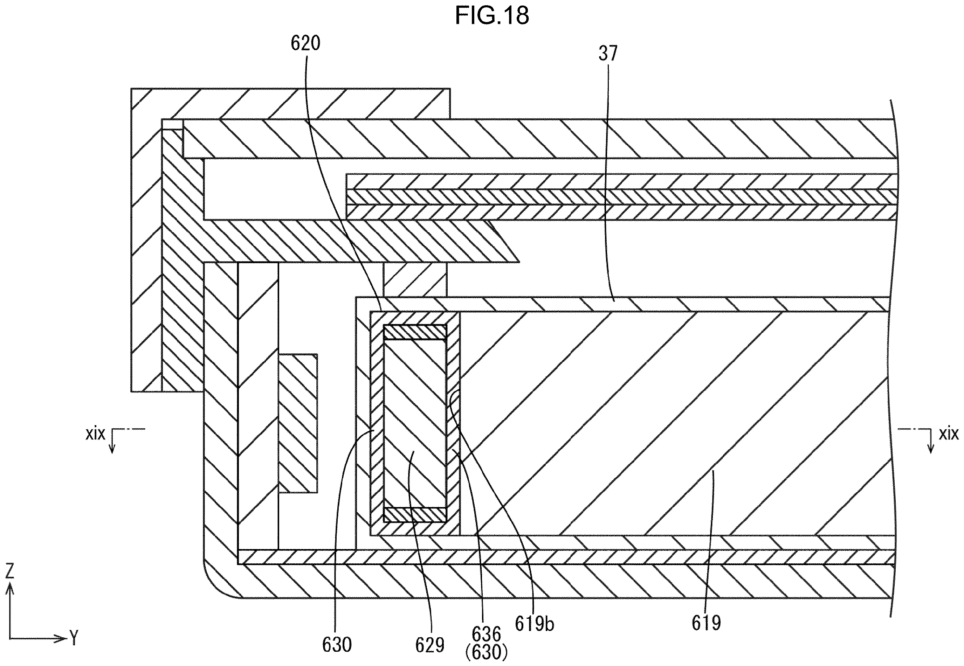

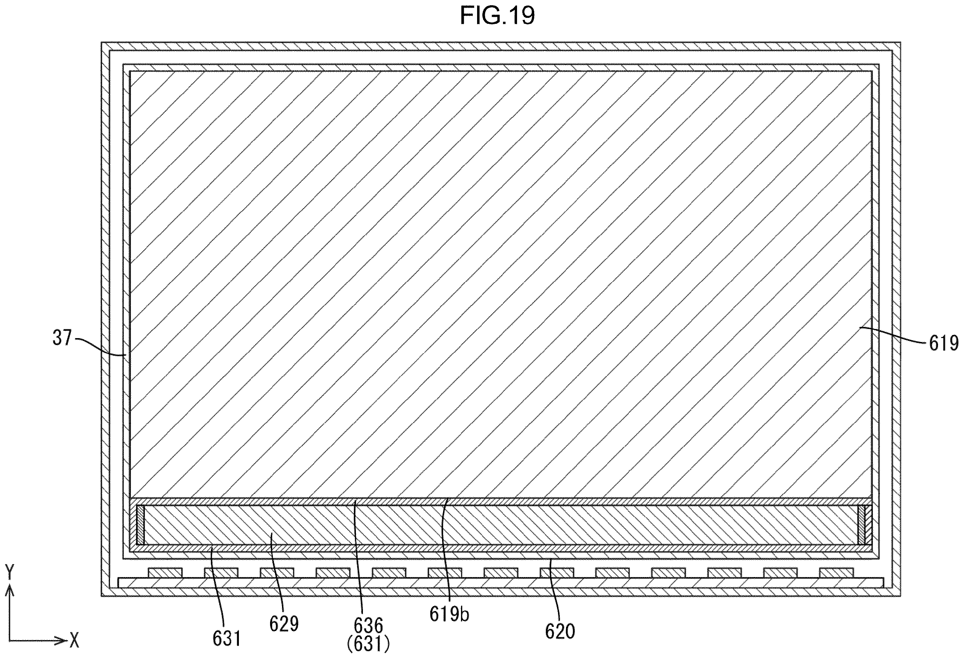

A seventh embodiment of the present invention will be described with reference to FIGS. 18 and 19. The seventh embodiment includes a light guide plate 619 and a holding portion 630 that are made of material different from that of the sixth embodiment. Configurations, functions, and effects similar to those of the sixth embodiment will not be described.

As illustrated in FIGS. 18 and 19, the light guide plate 619 and the holding portion 630 of a wavelength converter 620 are made of synthetic resin such as acrylic resin (PMMA). Entire areas of the light guide plate 619 and the wavelength converter 620 are collectively surrounded by a collective sealing member 37 to encapsulate phosphors contained in a phosphor containing portion 629. The collective sealing member 37 is made of substantially transparent material. In general, a synthetic resin tends to have higher moisture permeability in comparison to a glass material. Because the light guide plate 619 and the holding portion 630 are made of synthetic resin, the phosphors contained in the phosphor containing portion 629 may be degraded due to absorption of moisture. The light guide plate 619 and the wavelength converter 620 are collectively and entirely surrounded by the collective sealing member 37 from the outer side and the phosphors contained in the phosphor containing portion 629 are properly encapsulated. Therefore, the phosphors are less likely to be degraded. The collective sealing member 37 is not disposed between a third holding section 636 of the holding portion 630 of the wavelength converter 620 and a light entering end surface 619b of the light guide plate 619. Therefore, the light entering efficiency of light rays from the wavelength converter 620 to enter the light entering end surface 619b is maintained high. Similar to the sixth embodiment, the wavelength converter 620 made of synthetic resin is integrated into the light guide plate 619 by holding the third holding section 636 of the holding portion 630 in contact with the light entering end surface 619b of the light guide plate 619 made of the same synthetic resin and joining the wavelength converter 620 to the light guide plate 619.

As described above, this embodiment includes the collective sealing member 37 that collectively surrounds the wavelength converter 620 and the light guide plate 619 to encapsulate the phosphors. According to the configuration, the phosphors contained in the phosphor containing portion 629 are encapsulated with the collective sealing member 37 that collectively surrounds the wavelength converter 620 and the light guide plate 619. Therefore, the phosphors are less likely to be degraded due to the absorption of moisture. The collective sealing member 37 is not disposed between the wavelength converter 620 and light guide plate 619. Therefore, the light entering efficiency of the light rays from the wavelength converter 620 to enter the light entering end surface 619b is maintained high.

### <Eighth Embodiment>

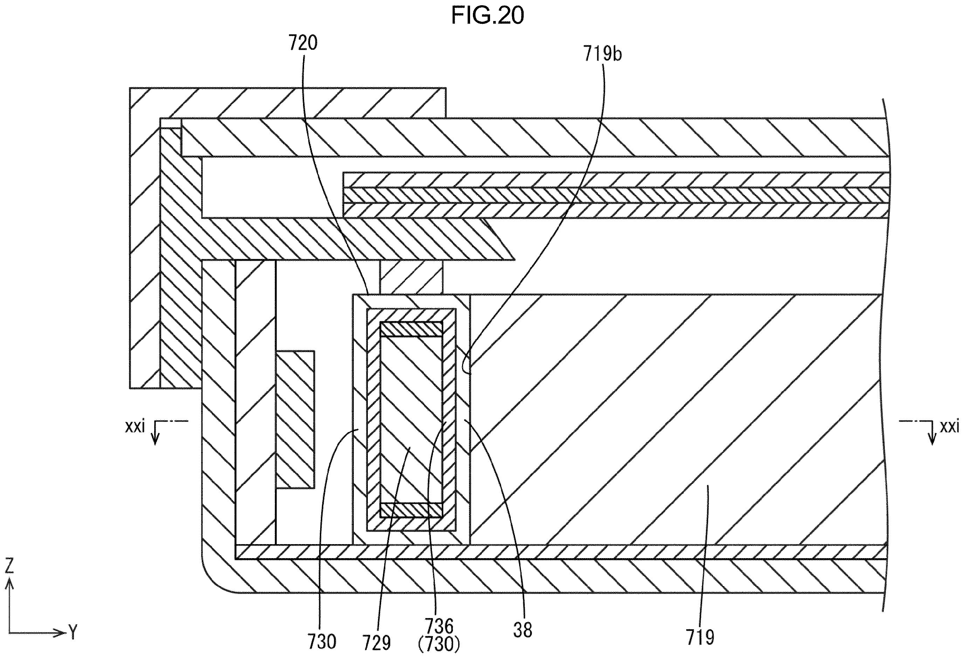

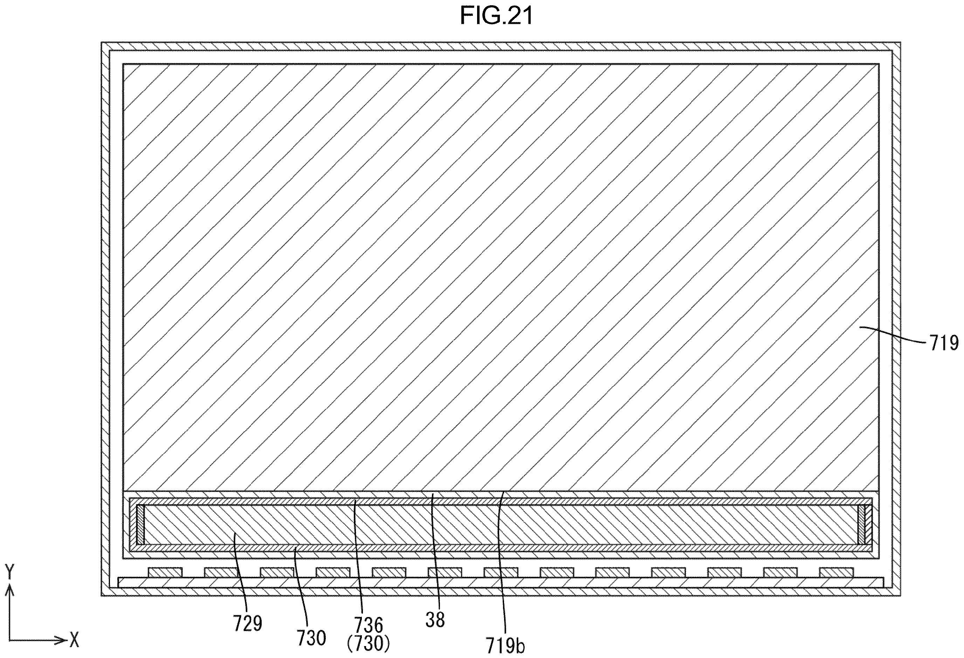

An eighth embodiment of the present invention will be described with reference to FIGS. 20 and 21. The eighth embodiment includes a sealing member 38 that surrounds a phosphor containing portion 729 and a holding portion 730 instead of the collective sealing member 37 in the seventh embodiment. Configurations, functions, and effects similar to those of the seventh embodiment will not be described.

As illustrated in FIGS. 20 and 21, a wavelength converter 720 in this embodiment includes the sealing member 38 that surrounds the phosphor containing portion 729 and the holding portion 730 to encapsulate phosphors contained in the phosphor containing portion 729. The sealing member 38 is disposed to surround entire areas of the holding portion 730 and a sealing member 735. Therefore, the phosphors contained in the phosphor containing portion 729 are properly encapsulated and thus less likely to be degraded. According to the configuration, the sealing member 38 does not surround a light guide plate 719 that is larger than the wavelength converter 720. Therefore, the sealing member 38 requires a small amount of material. This configuration is preferable for reducing the production cost. A portion of the sealing member 38 in contact with a third holding section 736 of the holding portion 730 is disposed between the third holding section 736 and a light entering end surface 719b of the light guide plate 719. To integrate the wavelength converter 720 into the light guide plate 719, the portion of the sealing member 38 between the third holding section 736 and the light entering end surface 719b of the light guide plate 719 is held in contact with the light entering end surface 719b of the light guide plate 719 and joined to the light guide plate 719 through the heat welding, the ultrasound welding, or other processes similar to the seventh embodiment.

As described above, this embodiment includes the sealing member 38 that surrounds the phosphor containing portion 729 and the holding portion 730 to encapsulate the phosphors. According to the configuration, the phosphors contained in the phosphor containing portion 729 are encapsulated with the sealing member 38 that surrounds the phosphor containing portion 729 and the holding portion 730. Therefore, the phosphors are less likely to be degraded due to absorption of moisture. Because the sealing member 38 surrounds the phosphor containing portion 729 and the holding portion 730 but not the light guide plate 719, the sealing member 38 requires the smaller amount of the material in comparison to a configuration in which a sealing member collectively surrounds the holding portion 730 and the light guide plate 719.

### <Ninth Embodiment>

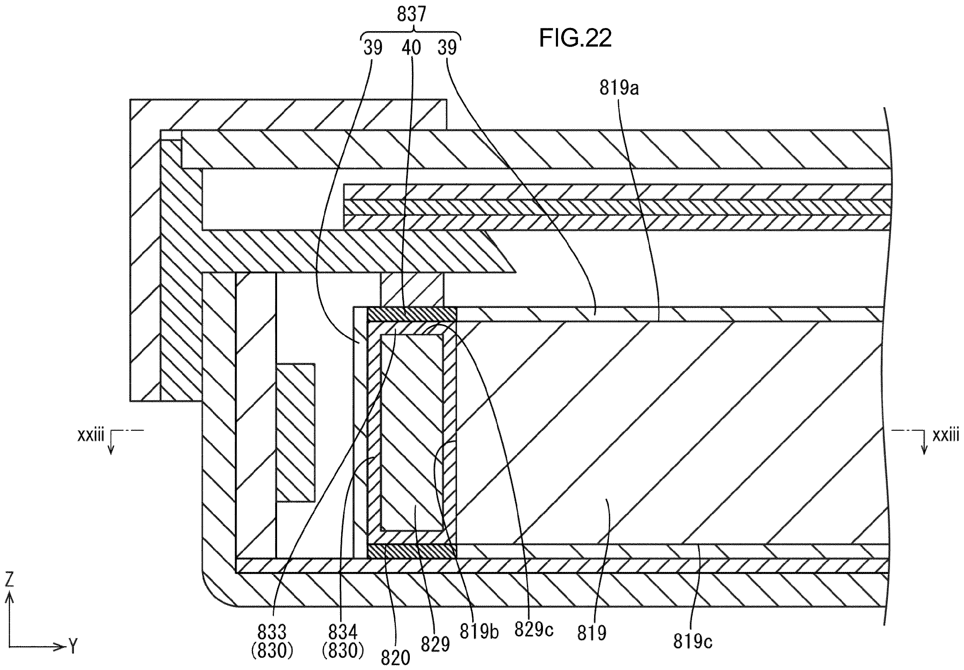

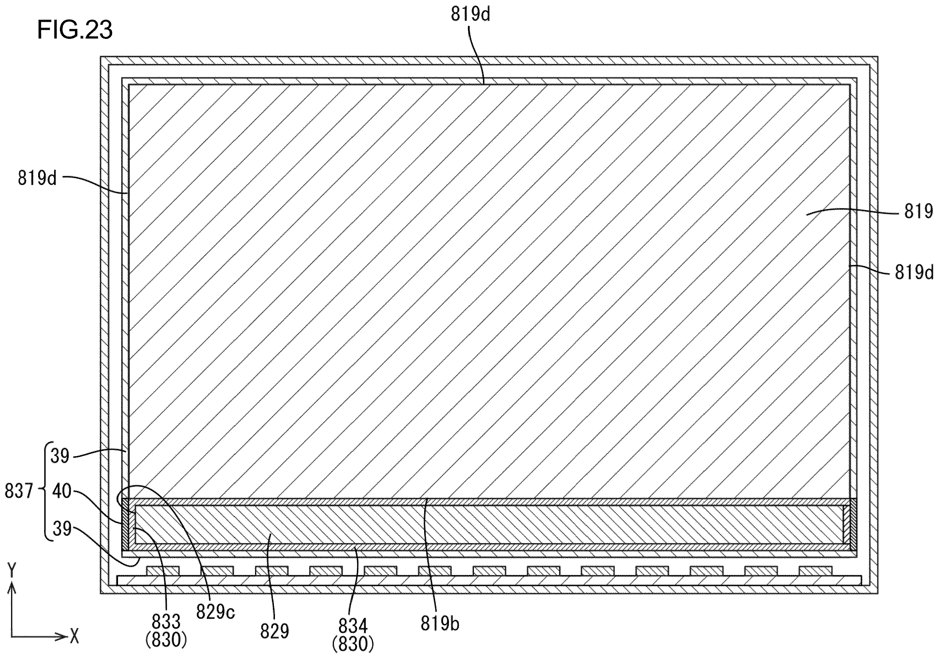

A ninth embodiment of the present invention will be described with reference to FIGS. 22 and 23. The ninth embodiment includes a collective sealing member 837 having a configuration different from that of the seventh embodiment. Configurations, functions, and effects similar to those of the seventh embodiment will not be described.

As illustrated in FIGS. 22 and 23, the collective sealing member 837 in this embodiment includes a light transmitting portion 39 and a light reflecting portion 40. The light transmitting portion 39 passes light rays. The light reflecting portion 40 reflects the light rays. The light transmitting portion 39 includes a portion of the collective sealing member 837 that covers a light exiting plate surface 819a, an opposite plate surface 819c, and a non-light entering end surface 819d of a light guide plate 819 and a portion that covers a second holding section 834 of a holding portion 830 of a wavelength converter 820. The light reflecting portion 40 includes a portion of the collecting sealing member 837 covering a first holding section 833 of the holding portion 830 of the wavelength converter 820. The light reflecting portion 40 is disposed along an annular surface 829c of the wavelength converter 820 to surround the entire annular surface 829c. Therefore, light rays in the wavelength converter 820 are reflected by the light reflecting portion 40 and efficiently directed to a light entering end surface 819b of the light guide plate 819. In this embodiment, the reflection layer in the seventh embodiment is omitted because the light reflecting portion 40 is provided.

### <Other Embodiments>

The present invention is not limited to the above embodiments described in the above sections and the drawings. For example, the following embodiments may be included in technical scopes of the technology.
(1) In each of the above embodiments (except for the third and the eighth embodiments), the reflection layer is disposed to surround (or overlap) the annular surface of the phosphor containing portion for the entire circumference. However, the reflection layer may be disposed to partially overlap the annular surface of the phosphor containing portion. For example, the reflection layer may selectively overlap a section of the annular surface extending along the long side of the light entering end surface of the light guide plate (i.e., including portions overlapping the phosphor containing portion from the front side and from the back side, respectively).
(2) A modification of the third embodiment may include a reflection layer that selectively overlaps a section of the annular surface extending along the long side of the light entering end surface of the light guide plate (i.e., including portions overlapping the phosphor containing portion from the front side and from the back side, respectively).
(3) A modification of the eighth embodiment may include a light reflecting portion that selectively overlaps a section of the annular surface extending along the long side of the light entering end surface of the light guide plate (i.e., including portions overlapping the phosphor containing portion from the front side and from the back side, respectively).
(4) In each of the above embodiments, the cross section of the wavelength converter has the rectangular shape. However, the cross section of the wavelength converter may be altered to an oval shape or an elliptical shape.
(5) A modification of any one of the first to the fourth embodiments may include a sealing member that seals the phosphor containing portion fitted in the recess of the light guide plate.
(6) In the second embodiment, the reflection layer is disposed to surround the annular surface of the phosphor containing portion for the entire circumference and the reflection sheet includes the opening. However, the reflection sheet may not have the opening and the rear portion of the reflection layer (the bottom portion) may be disposed to overlap the reflection sheet.
(7) The configuration of any one of the second to the fourth embodiments may be combined with the configuration of any one of the fifth to the ninth embodiments.
(8) The configuration of one of the fifth and the sixth embodiments may be combined with the configuration of any one of the seventh to the ninth embodiments.
(9) The configuration of the eighth embodiment may be combined with the configuration of the ninth embodiment.
(10) The backlight unit in each of the above embodiments is the one-side light entering type back light unit including the light guide plate with the end surface on one of the long sides configured as the light entering end surface. However, the present invention can be applied to a one-side light entering backlight unit including a light guide plate with an end surface on one of short sides configured as a light entering end surface.
(11) Other than above (10), the present invention may be applied to a two-side light entering backlight unit including a light guide plate with two end surfaces on the long sides or the short sides configured as light entering end surfaces. The present invention may be applied to a three-side light entering type backlight unit including a light guide plate with three end surfaces of a peripheral surface of the light guide plate configured as light entering end surfaces. The present invention may be applied to a four-side light entering type backlight unit including a light guide plate with all four end surfaces of a peripheral surface of the light guide plate configured as light entering end surfaces.
(12) In each of the embodiments, the LEDs include the blue LED components. However, LEDs including violet LED components configured to emit violet light rays that are visible light rays or ultraviolet LED components (near-ultraviolet LED components) configured to emit ultraviolet rays (e.g., near-ultraviolet rays) may be used instead of the blue LED components. It is preferable that a wavelength converter used with the LEDs including the violet LED components or the ultraviolet LED components contains red phosphors, green phosphors, and blue phosphors. The wavelength converter used with the LEDs including the violet LED components or the ultraviolet LED components may contain one or two of the red phosphors, the green phosphors, and the blue phosphors and the sealing members of the LEDs may contain the phosphors that are not contained in the wavelength converter. The colors of the phosphors may be altered as appropriate.
(13) In each of the embodiments, the LEDs include the blue LED components and the wavelength converter includes the green phosphors and the red phosphors. However, the LEDs may include red LED components configured to emit red light rays instead of the blue LED components to emit magenta light rays. A wavelength converter used with the LEDs may include green phosphors. Instead of the red LED components, the sealing member of the LEDs may contain red phosphors configured to emit red light rays when excited by blue light rays, which are exciting light rays.
(14) Other than the above (13), the LEDs may include green LED components configured to emit green light rays in addition to the blue LED component to emit cyan light rays. A wavelength converting sheet used with the LEDs may include red phosphors. Instead of the green LED components, the sealing member of the LEDs may contain green phosphors configured to emit green light rays when exited by the blue light rays, which are exciting light rays.
(15) In each of the above embodiments, the optical member is placed on the front side of the frame to provide the gap between the optical member and the light guide plate. However, the optical member may be directly placed on the front side of the light guide plate. In such a case, the frame may be press the front component of the optical member from the front side. Alternatively, the frame may be disposed between the components of the optical member.
(16) Each of the above embodiments includes three components in the optical member. However, the optical member may include two or less components or four or more components. The kinds of the components in the optical member may be altered as appropriate. For example, a diffuser sheet may be used. The sequence of the components in the optical member may be altered as appropriate.
(17) In each of the above embodiments, the wavelength converter contains the green phosphors and the red phosphors. However, the wavelength converter may contain yellow phosphors or contain the red phosphors and the green phosphors in addition to the yellow phosphors.
(18) In each of the above embodiments, the quantum dot phosphors used for the phosphors contained the wavelength converter are the core-shell type phosphors including CdSe and ZnS. However, core type quantum dot phosphors each having a single internal composition may be used. For example, a material (CdSe, CdS, ZnS) prepared by combining Zn, Cd, Hg, or Pb that could be a divalent cation with O, S, Se, or Te that could be a dianion may be singly used. Amaterial (indium phosphide (InP), gallium arsenide (GaAs)) prepared by combining Ga or In that could be a tervalent cation with P, As, or Sb that could be a tervalent anion or chalcopyrite type compounds (CuInSe₂) may be singly used. Other than the core-shell type quantum dot phosphors and the core type quantum dot phosphors, alloy type quantum dot phosphors may be used. Furthermore, quantum dot phosphors that do not contain cadmium may be used.
(19) In each of the above embodiments, the quantum dot phosphors used for the phosphors contained in the wavelength converter are the core-shell type quantum dot phosphors including CdSe and ZnS. However, core-shell type quantum dot phosphors including a combination of other materials may be used. Furthermore, quantum dot phosphors that do not contain cadmium may be used for the quantum dot phosphors contained in the wavelength converter.
(20) In each of the above embodiments, the quantum dot phosphors are contained in the wavelength converter. However, other type of phosphors may be contained in the wavelength converter. For example, sulfide phosphors may be contained in the wavelength converter. Specifically, SrGa₂S₄:Eu²⁺ may be used for the green phosphors and (Ca, Sr, Ba)S:Eu²⁺ may be used for the red phosphors.
(21) Other than the above (20), (Ca, Sr, Ba)₃SiO_{4:}Eu²⁺, β-SiAlON: Eu²⁺, or Ca₃Sc₂Si₃O₁₂:Ce³⁺ may be used for the green phosphors contained in the wavelength converter. (Ca, Sr, Ba)₂SiO₅N₈:Eu²⁺, CaAlSiN₃: Eu²⁺, or a complex fluoride fluorescent material (e.g., manganese-activated potassium fluorosilicate (K₂TiF₆)) may be used for the red phosphors contained in the wavelength converting sheet. (Y, Gd)₃(Al, Ga)₅O₁₂:Ce3⁺ (so-called YAG:Ce³⁺), α-SiAlON: Eu²⁺, or (Ca, Sr, Br)₃SiO₄:Eu2⁺ may be used for the yellow phosphors contained in the wavelength converting sheet.
(22) Other than the above (20) and (21), organic phosphors may be used for the phosphors contained in the wavelength converter. The organic phosphors may be low molecular organic phosphors including triazole or oxadiazole as a basic skeleton.
(23) Other than the above (20), (21), and (22), phosphors configured to convert wavelengths through energy transfer via dressed photons (near-field light) may be used for the phosphors contained in the wavelength converter. Preferable phosphors of this kind may be phosphors including zinc oxide quantum dots (ZnO-QD) with diameters from 3 nm to 5 nm (preferably about 4 nm) and DCM pigments dispersed in the zinc oxide quantum dots.
(24) In each of the above embodiments, the emission spectrum of the blue LED components in the LEDs (peak wavelengths, half width of each peak) may be altered as appropriate. The emission spectrum of the phosphors contained in the wavelength converter (peak wavelengths, half width of each peak) may be altered as appropriate.
(25) In each of the above embodiments, InGaN is used for the material of the blue LED components in the LEDs. However, GaN, AlGaN, GaF, ZnSe, ZnO, or AlGaInP may be used for the material of the LED components.
(26) In each of the above embodiments, the chassis is made of metal. However, the chassis may be made of synthetic resin.
(27) In each of the above embodiments, the LEDs are sued for the light sources. However, other type of light sources such as organic ELs may be used.
(28) In each of the above embodiments, the liquid crystal panel and the chassis are in the upright position with the short-side directions corresponding with the vertical direction. However, the liquid crystal panel and the chassis may be in the upright portion with the long-side directions corresponding with the vertical direction.
(29) In each of the above embodiments, the TFTs are used for the switching components of the liquid crystal display device. However, the present invention can be applied to a liquid crystal display device including switching components other than the TFTs (e.g., thin film diodes (TFD)). Furthermore, the present invention can be applied to a black-and-white liquid crystal display other than the color liquid crystal display.
(30) In each of the above embodiments, the transmissive type liquid crystal display device is provided. However, the present invention can be applied to a reflective type liquid crystal display device or a semitransmissive type liquid crystal display device.
(31) In each of the above embodiments, the liquid crystal display device including the liquid crystal panel as a display panel is provided. However, the present invention can be applied to display devices including other types of display panels.
(32) In each of the above embodiments, the television device including the tuner is provided is provided. However, the present invention can be applied to a display device without a tuner. Specifically, the present invention can be applied to a liquid crystal display panel used in an digital signage or an electronic blackboard.

### Explanation of Symbols

10: Liquid crystal display device (display device)
11: Liquid crystal panel (display panel)
12: backlight unit (lighting device)
17, 117, 217, 417, 517: LED (light source)
19, 119, 319, 419, 519, 619, 719, 819: Light guide plate
19a, 319a, 819a: Light exiting plate surface
19b, 119b, 419b, 519b, 619b, 719b, 819b: Light entering end surface
20, 120, 220, 420, 520, 620, 720, 820: Wavelength converter
29, 129, 229, 429, 529, 629, 729, 829: Phosphor containing portion
29a, 429a, 529a: Light entering surface
29b, 529b: Light exiting surface
29c, 129c, 429c, 529c, 829c: Annular surface
30, 130, 230, 330, 430, 530, 630, 730, 830: Holding portion
31, 131, 231, 331, 531: Reflection layer
37, 837: Collective sealing member
38: Sealing member

## Claims

1. A lighting device comprising:
a light source;
a light guide plate comprising:
a light entering end surface being at least a section of a peripheral surface of the light guide plate and through which light rays from the light source enter; and
a light exiting plate surface being any one of plate surfaces of the light guide plate and through which the light rays exit; and
a wavelength converter disposed between the light source and the light entering end surface and integrally provided with the light guide plate with direct contact with the light entering end surface, the wavelength converter containing phosphors for converting wavelengths of the light rays from the light source.

2. The lighting device according to claim 1, wherein the wavelength converter comprises at least:
a phosphor containing portion containing the phosphors, the phosphor containing portion including a light entering surface facing straight to the light source, a light exiting surface facing straight to the light entering end surface, and an annular surface having an annular shape and being adjacent to the light entering surface and the light exiting surface; and
a reflection layer disposed on an outer side of the phosphor containing portion along at least a section of the annular surface to reflect the light rays.

3. The lighting device according to claim 1 or 2, wherein the wavelength converter comprises at least:
a phosphor containing portion containing the phosphors, the phosphor containing portion including a light entering surface facing straight to the light source, a light exiting surface facing straight to the light entering end surface, and an annular surface having an annular shape and being adjacent to the light entering surface and the light exiting surface; and
a holding portion surrounding the phosphor containing portion along at lease the annular surface and holding the phosphor containing portion.

4. The lighting device according to claim 3, wherein
the wavelength converter comprises a reflection layer disposed on an outer side of the phosphor containing portion along at least a section of the annular surface to reflect the light rays, and
the reflection layer is disposed between the phosphor containing portion and the holding portion.

5. The lighting device according to claim 3, wherein
the wavelength converter includes a reflection layer disposed on an outer side of the phosphor containing portion along at least a section of the annular surface to reflect the light rays, and
the reflection layer is in contact with a surface of the holding portion on an opposite side from a phosphor containing portion side.

6. The lighting device according to any one of claims 3 to 5, wherein the holding portion is integrally formed with the light guide plate.

7. The lighting device according to any one of claims 3 to 5, wherein the holding portion is a separate component from the light guide plate and joined to the light guide plate.

8. The lighting device according to claim 7 further comprising a collective sealing member collectively surrounding the wavelength converter and the light guide plate to encapsulate the phosphors.

9. The lighting device according to claim 7, wherein the wavelength converter includes a sealing member surrounding the phosphor containing portion and the holding portion to encapsulate the phosphors.

10. The lighting device according to any one of claims 3 to 9, wherein the holding portion is disposed to surround an entire area of the phosphor containing portion.

11. The lighting device according to any one of claims 3 to 10, wherein the light guide plate and the holding portion are made of glass material.

12. The lighting device according to any one of claims 1 to 11, wherein the phosphors in the wavelength converter are quantum dot phosphors.

13. A display device comprising:
the lighting device according to any one of claims 1 to 12; and
a display panel configured to display an image using light from the lighting device.

14. A television device comprising the display device according to claim 13.
